# EUROPEAN PATENT SPECIFICATION

(11) **EP 4 512 843 B1**
(45) Date of publication and mention of the grant of the patent: **02.12.2026**
(21) Application number: 23791684.6
(22) Date of filing: 06.04.2023
(51) Int. Cl.: C08G 63/16, C08K 3/013, C08L 67/02, C08L 83/04, C08L 101/00

(54) **MODIFIER FOR FLUIDITY OF INORGANIC FILLER, COMPOSITION CONTAINING INORGANIC FILLER, AND HEAT-CONDUCTIVE SILICONE SHEET**
MODIFIZIERUNGSMITTEL FÜR DIE FLIESSFÄHIGKEIT EINES ANORGANISCHEN FÜLLSTOFFS, ZUSAMMENSETZUNG MIT DEM ANORGANISCHEN FÜLLSTOFF UND WÄRMELEITENDE SILIKONFOLIE
MODIFICATEUR POUR LA FLUIDITÉ D'UNE CHARGE INORGANIQUE, COMPOSITION CONTENANT UNE CHARGE INORGANIQUE ET FEUILLE DE SILICONE THERMOCONDUCTRICE

(30) Priority: 21.04.2022 JP 2022070008
(43) Date of publication of application: 26.02.2025
(73) Proprietor: DIC Corporation, Tokyo 174-8520 (JP)
(72) Inventor: YOSHIMURA, Hiroshi, Ichihara-shi, Chiba 290-8585 (JP); TAJIRI, Yusuke, Ichihara-shi, Chiba 290-8585 (JP); UJIHARA, Teppei, Ichihara-shi, Chiba 290-8585 (JP)
(74) Representative: Kraus & Lederer PartGmbB
(86) International application number: PCT/JP2023/014159
(87) International publication number: WO 2023/204033

(56) References cited:
- WO-A1-2005/049731
- WO-A1-2018/084066
- WO-A1-2020/066651
- WO-A1-2021/176901
- WO-A1-2021/192883
- WO-A1-2022/185930
- CH-A- 429 167
- JP-A- H09 302 083

## Description

### Technical Field

The present invention relates to a modifier for fluidity of an inorganic filler, a composition containing an inorganic filler, and a heat-conductive silicone sheet.

### Background Art

From a composition containing an inorganic filler, building materials, automotive members, absorbent sanitary articles, stone paper, heat-dissipating materials, and the like are molded, and have various functions such as impact resistance, flexing resistance, dimensional stability, moisture permeability, and heat dissipation properties due to the inorganic filler.

In order to enhance the functionality of the aforementioned molded articles and/or reduce cost due to weighting, a further increase in filling amount of the inorganic filler has been required. However, when the filling amount of the inorganic filler in the composition is increased, there are problems in that the fluidity of the inorganic filler is reduced and at the same time, the fluidity of the entirety of the composition is also reduced to significantly deteriorate the moldability of the composition.

For example, in application to a urethane water-proof floor material, calcium carbonate is generally used as an inorganic filler, but there is a problem in that an increase in filling amount of calcium carbonate increases viscosity and deteriorates moldability and handlingability.

As a means for solving a problem in that the moldability of a composition is deteriorated by blending a filler, there is a proposal of a method for further adding a fluidity modifier that improves the fluidity of the filler to improve the fluidity of the composition (e.g., PTL 1). CH 429 167 A discloses branched, aliphatic polyester exhibiting an acid number of 62 or 125. Citation List

### Patent Literature

PTL 1: WO2020/066651

### Summary of Invention

### Technical Problem

The use of the fluidity modifier of PTL 1 does not sufficiently achieve a fluidity-improving effect, and therefore a fluidity modifier for further improving the fluidity of the filler has been required. After the preparation of the composition, it takes a certain time to actually use the composition. However, even when the fluidity modifier of PTL 1 is added, the viscosity of the composition may be increased with the passage of time to make trouble during the use.

An object to be achieved by the present invention is to provide a modifier for fluidity of an inorganic filler that suppresses a change in viscosity with time and improves the fluidity of the inorganic filler.

Another object to be achieved by the present invention is to provide an inorganic filler-containing composition that suppresses a change in viscosity with time and improves the fluidity of the inorganic filler.

Still another object to be achieved by the present invention is to provide a molded article and a heat-conductive silicone sheet in which flexibility is not impaired even when the concentration of the filling inorganic filler is high.

### Solution to Problem

The inventors of the present invention have intensively investigated to achieve the objects, and as a result, found that a polyester having a specific structure and specific physical properties exhibits an excellent suppressing effect of the inorganic filler on a change in viscosity and an excellent improving effect on the fluidity of the inorganic filler, and have completed the present invention.

According to the present invention, the following modifier for fluidity of an inorganic filler, and the like are provided.
1. A modifier for fluidity of an inorganic filler that is a polyester represented by the following general formula (1-1) or (1-2):
   the polyester having an acid value of 3 to 400 mg KOH/g and a hydroxyl value of less than 9 mg KOH/g 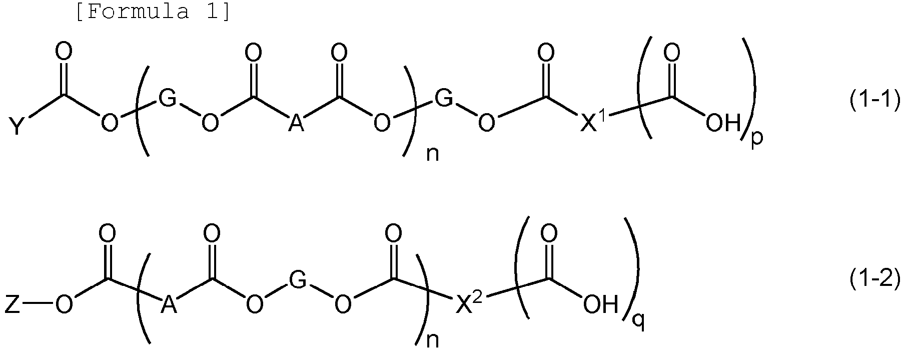
   (in the general formulae (1-1) and (1-2),
   G is an aliphatic diol residue having 2 to 20 carbon atoms;
   A is an aliphatic dicarboxylic acid residue having 2 to 10 carbon atoms;
   X¹ and X² are each independently an aliphatic polybasic acid residue having 2 to 10 carbon atoms or an aromatic polybasic acid residue having 6 to 15 carbon atoms;
   Y is a monocarboxylic acid residue having 1 to 20 carbon atoms;
   Z is a monoalcohol residue having 2 to 30 carbon atoms;
   p is an integer obtained by subtracting 1 from the number of basic acid functional groups in the aliphatic polybasic acid residue or aromatic polybasic acid residue of X¹;
   q is an integer obtained by subtracting 1 from the number of basic acid functional groups in the aliphatic polybasic acid residue or aromatic polybasic acid residue of X²; and
   n is the number of repetition).
2. The modifier for fluidity of an inorganic filler according to 1, wherein G is an aliphatic diol residue having a branched structure having 3 to 20 carbon atoms.
3. The modifier for fluidity of an inorganic filler according to 1 or 2, wherein A is an aliphatic dicarboxylic acid residue having 4 to 10 carbon atoms.
4. The modifier for fluidity of an inorganic filler according to any one of 1 to 3, wherein X¹ and X² are each independently an aliphatic dicarboxylic acid residue having 2 to 10 carbon atoms.
5. The modifier for fluidity of an inorganic filler according to any one of 1 to 4, wherein the polyester is a polyester represented by the general formula (1-2) where Z is an aliphatic monoalcohol residue having 2 to 30 carbon atoms.
6. The modifier for fluidity of an inorganic filler according to any one of 1 to 5, wherein the modifier has a number average molecular weight of 1,500 to 5,000.
7. The modifier for fluidity of an inorganic filler according to any one of 1 to 6, wherein the modifier is a liquid at room temperature.
8. The modifier for fluidity of an inorganic filler according to any one of 1 to 7, wherein the modifier is a modifier for fluidity of one or more types of inorganic fillers selected from the group consisting of calcium carbonate, silica, alumina, aluminum hydroxide, talc, barium titanate, boron nitride, and aluminum nitride.
9. An inorganic filler-containing composition including an inorganic filler and the modifier for fluidity of an inorganic filler according to any one of 1 to 8.
10. The inorganic filler-containing resin composition according to 9, wherein the inorganic filler is one or more selected from the group consisting of calcium carbonate, silica, alumina, aluminum hydroxide, talc, barium titanate, magnesium oxide, boron nitride, and aluminum nitride.
11. The inorganic filler-containing composition according to 9 or 10, further including a plasticizer.
12. The inorganic filler-containing composition according to any one of 9 to 11, including one or more types of resins selected from the group consisting of a polyolefin, a polyester, a polysulfide, a polyvinyl chloride, a modified polysulfide, a silicone resin, a modified silicone resin, an acrylic urethane resin, an epoxy resin, a polyurethane, a polyisocyanate resin, an acrylic resin, a polyester, and an unsaturated polyester.
13. A molded article of the inorganic filler-containing composition according to any one of 9 to 12.
14. A heat-conductive silicone sheet including a silicone resin, an inorganic filler, and a modifier for fluidity of an inorganic filler, wherein
   the inorganic filler is one or more selected from the group consisting of magnesium oxide, alumina, and aluminum hydroxide,
   the modifier for fluidity of an inorganic filler is a polyester represented by the following general formula (1-1) or (1-2), the polyester having an acid value of 3 to 400 mg KOH/g and a hydroxyl value of less than 9 mg KOH/g,
   a mass ratio (silicone resin:inorganic filler) of the silicone resin to the inorganic filler is from 50:50 to 1:99, and
   the modifier for fluidity of an inorganic filler is contained in an amount of 0.01 to 5 parts by mass with respect to a total amount of the silicone resin and the inorganic filler of 100 parts by mass. 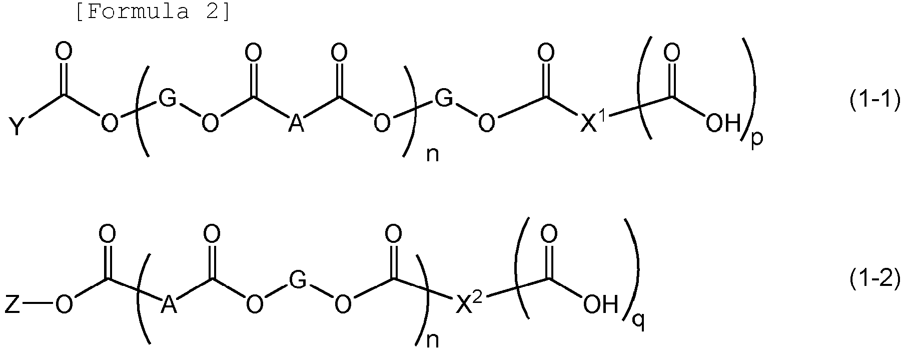
   (in the general formulae (1-1) and (1-2),
   G is an aliphatic diol residue having 2 to 20 carbon atoms;
   A is an aliphatic dicarboxylic acid residue having 2 to 10 carbon atoms;
   X¹ and X² are each independently an aliphatic polybasic acid residue having 2 to 10 carbon atoms or an aromatic polybasic acid residue having 6 to 15 carbon atoms;
   Y is a monocarboxylic acid residue having 1 to 20 carbon atoms;
   Z is a monoalcohol residue having 2 to 30 carbon atoms;
   p is an integer obtained by subtracting 1 from the number of basic acid functional groups in the aliphatic polybasic acid residue or aromatic polybasic acid residue of X¹;
   q is an integer obtained by subtracting 1 from the number of basic acid functional groups in the aliphatic polybasic acid residue or aromatic polybasic acid residue of X²; and
   n is the number of repetition).
15. The heat-conductive silicone sheet according to 14, wherein the heat-conductive silicone sheet satisfies H₉₀/H₈₀≤1.30 in which H₈₀ is a Shore A hardness when a mass ratio (silicone resin:inorganic filler) of the silicone resin to the inorganic filler is 20:80, and H₉₀ is a Shore A hardness when the mass ratio (silicone resin:inorganic filler) of the silicone resin to the inorganic filler is 10:90.

### Advantageous Effects of Invention

According to the present invention, a modifier for fluidity of an inorganic filler that suppresses a change in viscosity with time and improves the fluidity of the inorganic filler can be provided.

According to the present invention, an inorganic filler-containing composition that suppresses a change in viscosity with time and improves the fluidity of the inorganic filler can be provided.

According to the present invention, a molded article and a heat-conductive silicone sheet in which flexibility is not impaired even when the concentration of the filling inorganic filler is high can be provided.

### Description of Embodiments

Hereinafter, an embodiment of the present invention will be described. The present invention is not limited to the following embodiments, and the present invention may be appropriately modified and carried out as long as the effects of the present invention are not impaired.

### [Modifier for Fluidity of Inorganic Filler]

A modifier for fluidity of an inorganic filler of the present invention is a polyester represented by the following general formula (1-1) or (1-2). Hereinafter, the polyester that is the modifier for fluidity of an inorganic filler of the present invention may be referred to as the "polyester of the present invention". 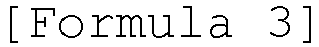 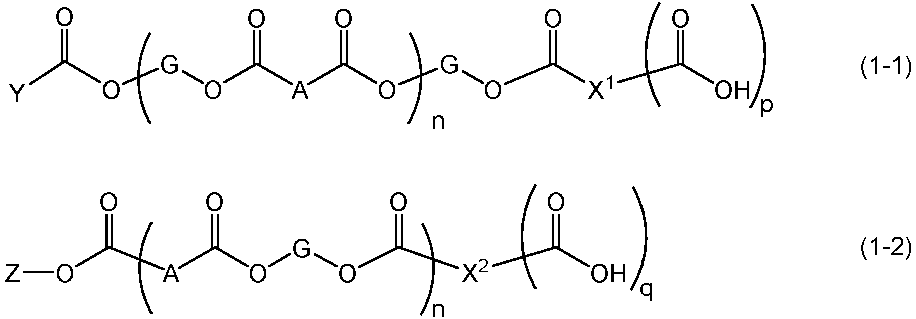 (in the general formulae (1-1) and (1-2),
G is an aliphatic diol residue having 2 to 20 carbon atoms;
A is an aliphatic dicarboxylic acid residue having 2 to 10 carbon atoms;
X¹ and X² are each independently an aliphatic polybasic acid residue having 2 to 10 carbon atoms or an aromatic polybasic acid residue having 6 to 15 carbon atoms;
Y is a monocarboxylic acid residue having 1 to 20 carbon atoms;
Z is a monoalcohol residue having 2 to 30 carbon atoms;
p is an integer obtained by subtracting 1 from the number of basic acid functional groups in the aliphatic polybasic acid residue or aromatic polybasic acid residue of X¹;
q is an integer obtained by subtracting 1 from the number of basic acid functional groups in the aliphatic polybasic acid residue or aromatic polybasic acid residue of X²; and
n is the number of repetition).

It is considered that a carboxyl group at an end of the polyester of the present invention adsorbs to an inorganic filler and a polyester chain having another capped end can hold compatibility with a composition, and therefore the polyester of the present invention modifies the fluidity of the inorganic filler.

In the present invention, "diol residue" and "alcohol residue" refer to an organic group derived from a diol and an alcohol, respectively, by removal of a hydroxyl group.

In the present invention, "carboxylic acid residue" refers to an organic group derived from a carboxylic acid by removal of a carboxyl group. The number of carbon atoms in a carboxylic acid residue does not include a carbon atom in the carboxyl group.

In the present invention, "polybasic acid residue" refers to an organic group derived from a polybasic acid having two or more basic acid functional groups by removal of a basic acid functional group. For example, when a polybasic acid residue is a dicarboxylic acid residue, a tricarboxylic acid residue, or a tetracarboxylic acid residue, the dicarboxylic acid residue, the tricarboxylic acid residue, or the tetracarboxylic acid residue is a remaining organic group obtained by removal of the carboxyl group in these acids. The number of carbon atoms in the dicarboxylic acid residue, the tricarboxylic acid residue, and the tetracarboxylic acid residue does not include a carbon atom in the carboxyl group.

An aliphatic chain of the aliphatic diol residue having 2 to 20 carbon atoms of G may be linear or branched, or have an alicyclic structure and/or an ether bond. The aliphatic chain of the aliphatic diol residue of G may be a saturated aliphatic chain or an unsaturated aliphatic chain having a carbon-carbon unsaturated bond.

The aliphatic diol residue having 2 to 20 carbon atoms of G is preferably an aliphatic diol residue having a branched structure having 3 to 20 carbon atoms, and more preferably a diol represented by the following general formula (G-1):

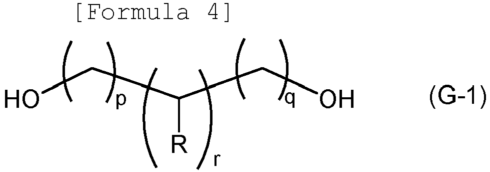

(In the general formula (G-1),
p is an integer of 1 or more, q is an integer of 0 or more, r is an integer of 1 or more,
R is a hydrogen atom or an alkyl group having 1 or more carbon atoms, at least one of r Rs is an alkyl group having 1 or more carbon atoms, and
a sum of p, q, r, and the number of the carbon atoms of R is an integer of 3 to 20.)

In the general formula (G-1), the alkyl group of R is preferably an alkyl group having 7 to 18 carbon atoms, and more preferably an alkyl group having 10 to 18 carbon atoms.

Examples of the aliphatic diol residue having 2 to 20 carbon atoms of G include an ethylene glycol residue, a 1,2-propylene glycol residue, a 1,3-propanediol residue, a 1,2-butanediol residue, a 1,3-butanediol residue, a 2-methyl-1,3-propanediol residue, a 1,4-butanediol residue, a 1,5-pentanediol residue, a 2,2-dimethyl-1,3-propanediol (neopentylglycol) residue, a 2,2-dimethyl-1,3-propanediol (3,3-dimethylolpentane) residue, a 2-n-butyl-2-ethyl-1,3-propanediol (3,3-dimethylolhepatane) residue, a 3-methyl-1,5-pentanediol residue, a 1,6-hexanediol residue, a 2,2,4-trimethyl-1,3-pentanediol residue, a 2-ethyl-1,3-hexanediol residue, a 2-methyl-1,8-octanediol residue, a 1,9-nonanediol residue, a 1,10-decanediol residue, a 1,12-dodecanediol residue, a 1,2-tetradecanediol residue, and a 1,2-dodecanediol residue.

The aliphatic diol residue having 2 to 20 carbon atoms of G may have an alicyclic structure, and examples of the aliphatic diol residue including an alicyclic structure and having 2 to 20 carbon atoms include a 1,3-cyclopentanediol residue, a 1,2-cyclohexanediol residue, a 1,3-cyclohexanediol residue, a 1,4-cyclohexanediol residue, a 1,2-cyclohexanedimethanol residue, and a 1,4-cyclohexanedimethanol residue.

The aliphatic diol residue having 2 to 20 carbon atoms of G may have an ether bond (-O-), and examples of the aliphatic diol residue including an ether bond and having 2 to 20 carbon atoms include a diethylene glycol residue, a triethylene glycol residue, a tetraethlyene glycol residue, a dipropylene glycol residue, and a tripropylene glycol residue.

G is preferably an aliphatic diol residue having 2 to 14 carbon atoms, and more preferably an ethylene glycol residue, a diethylene glycol residue, a 1,2-propylene glycol residue, a 1,6-hexanediol residue, a 3-methyl-1,5-pentanediol residue, a 1,4-butanediol residue, a 1,3-butanediol residue, a 1,2-tetradecanediol residue, or a 1,2-dodecanediol residue.

An aliphatic chain of the aliphatic dicarboxylic acid residue of A may be linear or branched, or have an alicyclic structure and/or an ether bond. The aliphatic chain of the aliphatic dicarboxylic acid residue of A may be a saturated aliphatic chain or an unsaturated aliphatic chain having a carbon-carbon unsaturated bond.

Examples of the aliphatic dicarboxylic acid residue having 2 to 10 carbon atoms of A include a malonic acid residue, a succinic acid residue, a glutaric acid residue, an adipic acid residue, a pimelic acid residue, a suberic acid residue, an azelaic acid residue, a sebacic acid residue, a dodecanedicarboxylic acid residue, a maleic acid residue, a fumaric acid residue, a 1,2-dicarboxycyclohexane residue, and a 1,2-dicarboxycyclohexene residue. The aliphatic dicarboxylic acid residue having 2 to 10 carbon atoms is preferably a succinic acid residue, a glutaric acid residue, an adipic acid residue, or a sebacic acid residue.

The aliphatic dicarboxylic acid residue having 2 to 10 carbon atoms of A is preferably an aliphatic dicarboxylic acid residue having 4 to 10 carbon atoms. When the distance of the ester bond corresponds to 4 to 10 carbon atoms, an influence of water can be reduced, and the reactivity with a base component of an inorganic filler-containing composition described below can be suppressed.

An aliphatic chain of the aliphatic polybasic acid residue having 2 to 10 carbon atoms of each of X¹ and X² may be linear or branched, or have an alicyclic structure and/or an ether bond.

The aliphatic polybasic acid residue having 2 to 10 carbon atoms of each of X¹ and X² is preferably an aliphatic dicarboxylic acid residue having 2 to 10 carbon atoms, and examples of the aliphatic dicarboxylic acid residue having 2 to 10 carbon atoms include a succinic acid residue, a glutaric acid residue, an adipic acid residue, a pimelic acid residue, a suberic acid residue, an azelaic acid residue, a sebacic acid residue, a dodecanedicarboxylic acid residue, a maleic acid residue, a fumaric acid residue, a 1,2-dicarboxycyclohexane residue, and a 1,2-dicarboxycyclohexene residue. The aliphatic dicarboxylic acid residue having 2 to 10 carbon atoms is preferably a succinic acid residue, a glutaric acid residue, an adipic acid residue, a sebacic acid residue, or a dodecanedicarboxylic acid residue.

The aromatic polybasic acid residue having 6 to 15 carbon atoms of each of X¹ and X² is preferably an aromatic dicarboxylic acid residue having 6 to 15 carbon atoms, an aromatic tricarboxylic acid residue having 6 to 15 carbon atoms, or an aromatic tetracarboxylic acid having 6 to 15 carbon atoms, and specific examples thereof include a phthalic acid residue, a trimellitic acid residue, and a pyromellitic acid residue.

Each of X¹ and X² is preferably an aliphatic dicarboxylic acid residue having 2 to 10 carbon atoms, and more preferably an aliphatic dicarboxylic acid residue having 5 to 10 carbon atoms.

The monocarboxylic acid residue having 1 to 20 carbon atoms of Y may be, for example, either an aliphatic monocarboxylic acid residue having 1 to 20 carbon atoms or an aromatic monocarboxylic acid residue having 1 to 20 carbon atoms, and is preferably an aliphatic monocarboxylic acid residue having 1 to 20 carbon atoms.

When Y is an aliphatic monocarboxylic acid residue having 1 to 20 carbon atoms, an aliphatic chain of the aliphatic monocarboxylic acid residue having 1 to 20 carbon atoms may be linear or branched, or have an alicyclic structure and/or an ether bond. The aliphatic chain of the aliphatic monocarboxylic acid residue having 1 to 20 carbon atoms may be a saturated aliphatic chain or an unsaturated aliphatic chain having a carbon-carbon unsaturated bond.

Examples of the monocarboxylic acid residue having 1 to 20 carbon atoms of Y include an acetic acid residue, a propionic acid residue, a butanoic acid residue, a hexanoic acid residue, an octanoic acid residue, an octylic acid residue, a benzoic acid residue, a dimethylbenzoic acid residue, a trimethylbenzoic acid residue, a tetramethylbenzoic acid residue, an ethylbenzoic acid residue, a propylbenzoic acid residue, a butylbenzoic acid residue, a cumic acid residue, a para-tert-butylbenzoic acid residue, an o-toluic acid residue, a m-toluic acid residue, a p-toluic acid residue, an ethoxybenzoic acid residue, a propoxybenzoic acid residue, and an anisic acid residue.

The monoalcohol residue having 2 to 30 carbon atoms of Z may be, for example, either an aliphatic monoalcohol residue having 2 to 30 carbon atoms or an aromatic monoalcohol residue having 6 to 30 carbon atoms, and is preferably an aliphatic monoalcohol residue having 2 to 30 carbon atoms.

When Z is an aliphatic monoalcohol residue having 2 to 30 carbon atoms, an aliphatic chain of the aliphatic monoalcohol residue having 2 to 30 carbon atoms may be linear or branched, or have an alicyclic structure and/or an ether bond. The aliphatic chain of the aliphatic monoalcohol residue having 2 to 30 carbon atoms may be a saturated aliphatic chain or an unsaturated aliphatic chain having a carbon-carbon unsaturated bond.

The monoalcohol residue having 2 to 30 carbon atoms of Z is preferably an alkylalcohol residue having 2 to 10 carbon atoms, or an alcohol residue of polyalkylene glycol monoalkyl ether having 5 to 30 carbon atoms.

Examples of the alkylalcohol residue having 2 to 10 carbon atoms of Z include an ethanol residue, a propanol residue, a butanol residue, a pentanol residue, a hexanol residue, a cyclohexanol residue, a heptanol residue, an octanol residue, a nonanol residue, and a decanol residue.

Examples of the alcohol residue of polyalkylene glycol monoalkyl ether having 5 to 30 carbon atoms of Z include polyethylene glycol alkyl ethers such as diethylene glycol monomethyl ether, and triethylene glycol monomethyl ether; polypropylene glycol alkyl ethers such as polypropylene glycol monomethyl ether, and polypropylene glycol monoethyl ether; and alcohol residues such as (polyethylene glycol-polypropylene glycol) monoalkyl ether.

The average value for the number of repetition of n is preferably from 0 to 20, more preferably from 0.2 to 15, and still more preferably from 0.5 to 10.

The average value for the number of repetition of n can be calculated from the number average molecular weight of the polyester of the present invention.
p is an integer obtained by subtracting 1 from the number of basic acid functional groups in the aliphatic polybasic acid residue or aromatic polybasic acid residue of X¹, and p is an integer obtained by subtracting 1 from the number of basic acid functional groups in the aliphatic polybasic acid residue or aromatic polybasic acid residue of X². Therefore, when X¹ and X² are each independently an aliphatic dicarboxylic acid residue having 2 to 10 carbon atoms, the number of the basic acid functional group (carboxyl group) of each of X¹ and X² is 2, p and q are each 1, and the general formulae (1-1) and (1-2) are as described below.

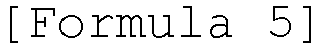

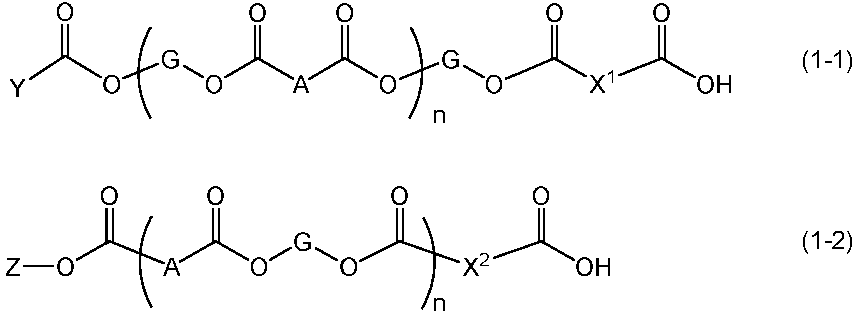

The polyester of the present invention needs to be a polyester satisfying the general formula (1-1) or (1-2). A mixture of two or more types of polyesters having different structures may be used.

The number average molecular weight (Mn) of the polyester of the present invention is, for example, from 500 to 5,000, preferably from 1,000 to 4,000, more preferably from 1,500 to 4,000, and further preferably from 1,500 to 3,500. When the lower limit of the number average molecular weight is 1,500 or more, a fluidity-improving effect can be particularly expected.

The number average molecular weight (Mn) is a value calculated in terms of polystyrene on the basis of gel permeation chromatography (GPC) measurement, and is measured by a method described in Examples.

The acid value of the polyester of the present invention is from 3 to 400 mg KOH/g, preferably from 3 to 100 mg KOH/g, and more preferably from 3 to 50 KOH/g. When the acid value of the polyester of the present invention is within this range, the fluidity-improving effect is effectively expressed by an interaction with the inorganic filler.

The acid value of the polyester is confirmed by a method described in Examples.

The hydroxyl value of the polyester of the present invention is less than 9 mg KOH/g, preferably 8 mg KOH/g or less, and more preferably 7 mg KOH/g or less. When the hydroxyl value of the polyester of the present invention is less than 9.0 mg KOH/g, the affinity and reactivity of the polyester with a base component contained in the inorganic filler-containing composition described below are reduced, and an increase in tackiness of the entirety of the composition can be suppressed.

The lower limit of the hydroxyl value of the polyester of the present invention is, for example, 0 mg KOH/g or more or 1 mg KOH/g or more.

The hydroxyl value of the polyester is confirmed by a method described in Examples.

The properties of the polyester of the present invention vary depending on the number average molecular weight, the composition, and the like, but the polyester of the present invention is preferably a liquid at room temperature.

Herein, a "liquid at room temperature" means that the polyester of the present invention at a room temperature of 25°C is a property exhibiting fluidity.

The polyester of the present invention is formed from a reaction raw material including an aliphatic diol, an aliphatic dicarboxylic acid, an aliphatic polybasic acid and/or an aromatic polybasic acid, and a monoalcohol and/or monocarboxylic acid. Herein, the "reaction raw material" means a raw material constituting the polyester of the present invention, and means that a solvent and a catalyst that do not constitute the polyester are not contained.

A method for producing the polyester of the present invention is not particularly limited, and the polyester of the present invention can be produced by a publicly known method or can be produced by a production method described below.

The reaction raw material for the polyester of the present invention may include an aliphatic diol, an aliphatic dicarboxylic acid, an aliphatic polybasic acid and/or an aromatic polybasic acid, and a monoalcohol and/or monocarboxylic acid, and may include another raw material.

It is preferable that the amount of an aliphatic diol, an aliphatic dicarboxylic acid, an aliphatic polybasic acid and/or an aromatic polybasic acid, and a monoalcohol and/or monocarboxylic acid with respect to the whole amount of the reaction raw material for the polyester of the present invention be 90 mass% or more, and it is more preferable that the reaction raw material consist of an aliphatic diol, an aliphatic dicarboxylic acid, an aliphatic polybasic acid and/or an aromatic polybasic acid, and a monoalcohol and/or monocarboxylic acid.

The aliphatic diol used in the production of the polyester of the present invention is an aliphatic diol that corresponds to the aliphatic diol residue having 2 to 20 carbon atoms of G. As the used aliphatic diol, one type of aliphatic diol may be used alone or two or more types thereof may be used in combination.

The aliphatic dicarboxylic acid used in the production of the polyester of the present invention is an aliphatic dicarboxylic acid that corresponds to the aliphatic dicarboxylic acid residue having 2 to 10 carbon atoms of A. As the used aliphatic dicarboxylic acid, one type of aliphatic dicarboxylic acid may be used alone or two or more types thereof may be used in combination.

The aliphatic polybasic acid used in the production of the polyester of the present invention is an aliphatic polybasic acid that corresponds to the aliphatic polybasic acid residue having 2 to 10 carbon atoms of each of X¹ and X². As the used aliphatic polybasic acid, one type of aliphatic polybasic acid may be used alone or two or more types thereof may be used in combination.

The aromatic polybasic acid used in the production of the polyester of the present invention is an aromatic polybasic acid that corresponds to the aromatic polybasic acid residue having 6 to 15 carbon atoms of each of X¹ and X². As the used aromatic polybasic acid, one type of aromatic polybasic acid may be used alone or two or more types thereof may be used in combination.

The monocarboxylic acid used in the production of the polyester of the present invention is a monocarboxylic acid that corresponds to the monocarboxylic acid residue having 1 to 20 carbon atoms of Y. As the used monocarboxylic acid, one type of monocarboxylic acid may be used alone or two or more types thereof may be used in combination.

The monoalcohol used in the production of the polyester of the present invention is a monoalcohol that corresponds to the monoalcohol residue having 2 to 30 carbon atoms of Z. As the used monoalcohol, one type of monoalcohol may be used alone or two or more types thereof may be used in combination.

When the polybasic acid (aliphatic polybasic acid and/or aromatic polybasic acid) that is the reaction raw material is an aliphatic dicarboxylic acid, the reaction raw material may include an aliphatic diol, an aliphatic dicarboxylic acid, a monoalcohol and/or a monocarboxylic acid.

As the monocarboxylic acid used in the production of the polyester of the present invention, a hydrogenated vegetable oil fatty acid may be used. Examples of the hydrogenated vegetable oil fatty acid include a hydrogenated coconut oil fatty acid, a hydrogenated palm kernel oil fatty acid, a hydrogenated palm oil fatty acid, a hydrogenated olive oil fatty acid, a hydrogenated castor oil fatty acid, and a hydrogenated rapeseed oil fatty acid. They are obtained by hydrolysis and hydrogeneration of coconut, palm kernel, palm, olive, castor, and rapeseed, respectively, and are each a mixture of two or more types of long-chain aliphatic monocarboxylic acids including an aliphatic monocarboxylic acid having 8 to 21 carbon atoms.

As the monocarboxylic acid used in the production of the polyester of the present invention, a vegetable oil fatty acid that is not hydrogenated may be used as long as the effects of the present invention are not impaired. The vegetable oil fatty acid is not limited to these described above.

When the polyester of the present invention is a polyester obtained using, as a reaction raw material, the aliphatic diol, the aliphatic dicarboxylic acid, the aliphatic polybasic acid and/or the aromatic polybasic acid, and the hydrogenated vegetable oil fatty acid, the obtained polyester may be a mixture of two or more types of polyesters represented by the general formula (1-1).

As the aliphatic diol, the aliphatic dicarboxylic acid, the aliphatic polybasic acid, the aromatic polybasic acid, the monoalcohol, and the monocarboxylic acid used in the production of the polyester of the present invention, derivatives thereof may be used. Examples of the derivatives include an esterified product, an acid chloride, an acid anhydride, and a cyclic ester.

For example, an epoxy compound reacts with a carboxylic acid, resulting in ring-opening, to become a diol, and therefore as a derivative of the aliphatic diol used for the reaction raw material of the present invention, an aliphatic epoxy compound may be used.

The polyester represented by the general formula (1-1) can be produced, for example, by feeding the aliphatic diol, the aliphatic dicarboxylic acid, the aliphatic polybasic acid and/or the aromatic polybasic acid, and the monocarboxylic acid together so that the equivalent of a carboxyl group is more than the equivalent of a hydroxyl group, resulting in a reaction. The polyester represented by the general formula (1-1) can be produced, for example, by reacting the aliphatic diol with the aliphatic dicarboxylic acid at any equivalent ratio, and reacting a hydroxyl group at the end of the resultant polyester with the monocarboxylic acid and the aliphatic polybasic acid and/or the aromatic polybasic acid to block the hydroxyl group with the carboxylic acid residue.

The polyester represented by the general formula (1-2) can be produced, for example, by feeding the aliphatic diol, the aliphatic dicarboxylic acid, the aliphatic polybasic acid and/or the aromatic polybasic acid, and the monoalcohol together so that the equivalent of a carboxyl group is more than the equivalent of a hydroxyl group, resulting in a reaction. The polyester represented by the general formula (1-2) can be produced, for example, by reacting the aliphatic diol with the aliphatic dicarboxylic acid at any equivalent ratio, and reacting the end of the resultant polyester with the monoalcohol and the aliphatic polybasic acid and/or the aromatic polybasic acid.

In the production of the polyester of the present invention, the reaction of the reaction raw material may be an esterification reaction, for example, at a temperature range of 170 to 250°C for 10 to 25 hours in the presence of an esterification catalyst as required.

Conditions such as the temperature and the time of the esterification reaction are not particularly limited, and may be appropriately set.

Examples of the esterification catalyst include titanium-based catalysts such as tetraisopropyl titanate, and tetrabutyl titanate; zinc-based catalysts such as zinc acetate; tin-based catalysts such as tin octylate, and dibutyl tin oxide; and organic sulfonic acid-based catalysts such as p-toluenesulfonic acid.

The usage amount of the esterification catalyst may be appropriately set, but is generally from 0.0001 to 0.1 parts by mass with respect to a whole amount of the reaction raw material of 100 parts by mass.

### [Inorganic Filler-containing Composition]

The modifier for fluidity of an inorganic filler of the present invention can function as a modifier for fluidity of an inorganic filler of a composition containing an inorganic filler (inorganic filler-containing composition). The inclusion of the modifier for fluidity of an inorganic filler of the present invention can increase the filling amount of the inorganic filler in the composition, and can also improve handlingability, moldability, and the like.

Hereinafter, components contained in the inorganic filler-containing composition of the present invention will be described.

### (Inorganic Filler)

An inorganic filler contained in the inorganic filler-containing composition of the present invention is not particularly limited, and examples thereof include calcium carbonate, talc, silica, clay, antimony oxide, alumina, aluminum hydroxide, magnesium hydroxide, hydrotalcite, calcium silicate, magnesium oxide, potassium titanate, barium titanate, titanium oxide, calcium oxide, manganese dioxide, boron nitride, and aluminum nitride.

One type of the inorganic filler may be used alone or two or more types thereof may be used in combination.

The inorganic filler is preferably one or more selected from the group consisting of calcium carbonate, silica, alumina, aluminum hydroxide, barium titanate, talc, magnesium oxide, boron nitride, and aluminum nitride, and more preferably one or more selected from the group consisting of calcium carbonate, alumina, aluminum hydroxide, talc, and magnesium oxide.

The shape of the inorganic filler, including a particle diameter, a fiber length, and a fiber length, is not particularly limited, and may be appropriately adjusted according to an intended application. The surface treatment state of the inorganic filler is not particularly limited, and for example, the inorganic filler may be surface-modified with a saturated fatty acid and the like according to the intended application.

The content of the inorganic filler is not particularly limited, but is, for example, from 40 to 98 mass%, preferably from 45 to 95 mass%, and further preferably from 55 to 95 mass%, with respect to the whole solid content of the inorganic filler-containing composition.

Herein, a "solid content" refers to a component in the inorganic filler-containing composition other than a substance to be volatilized, such as water and a solvent. It is noted that the solid content includes those in a liquid state, a starch syrup-like state, or a waxy state at room temperature near 25°C, and does not necessarily mean a solid.

The content of the modifier for fluidity of an inorganic filler of the present invention is not particularly limited, but is, for example, from 0.01 to 30 parts by mass with respect to 100 parts by mass of the inorganic filler, preferably from 0.05 to 10 parts by mass with respect to 100 parts by mass of the inorganic filler, and more preferably from 0.1 to 5.0 parts by mass with respect to 100 parts by mass of the inorganic filler.

### (Plasticizer)

The inorganic filler-containing composition of the present invention preferably includes a plasticizer.

Examples of the plasticizer include benzoate esters such as diethylene glycol dibenzoate; phthalate esters such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); terephthalate esters such as bis(2-ethylhexyl) terephthalate (DOTP); isophthalate esters such as bis(2-ethylhexyl) isophthalate (DOIP); pyromellitate esters such as tetra-2-ethylhexyl pyromellitate (TOPM); aliphatic dibasic acid esters such as di-2-ethylhexyl adipate (DOA), diisononyl adipate (DINA), diisodecyl adipate (DIDA), di-2-ethylhexyl sebacate (DOS), and diisononyl sebacate (DINS); phosphate esters such as tri-2-ethylhexyl phosphate (TOP), and tricresyl phosphate (TCP); polyhydric alcohol alkyl esters such as pentaerythritol; polyesters having a molecular weight of 800 to 4,000 synthesized by polyesterification of dibasic acid, such as adipic acid, and glycol; epoxidized esters such as epoxidized soy bean oil, and epoxidized linseed oil; alicyclic dibasic acids such as diisononyl hexahydrophthalate; fatty acid glycol esters such as 1.4-butanediol dicaprate; tributyl acetylcitrate (ATBC); chlorinated paraffin such as chlorinated paraffin wax and chlorinated n-paraffin; chlorinated fatty acid esters such as chlorinated stearate; higher fatty acid esters such as butyl oleate; and ether ester-based plasticizers such as pentaerythritol ester, diethylene glycol dibenzoate, and dibutylcarbitol adipate.

The used plasticizer may be determined according to the intended application, and one type of the plasticizer may be used alone or two or more types thereof may be used in combination.

The content of the plasticizer is not particularly limited, but is, for example, from 5 to 300 parts by mass with respect to 100 parts by mass of the inorganic filler, and preferably from 10 to 200 parts by mass with respect to 100 parts by mass of the inorganic filler.

An additive contained in the inorganic filler-containing composition of the present invention is not limited to the inorganic filler-containing composition of the present invention and the plasticizer, and the inorganic filler-containing composition may contain other additives.

Examples of the other additives include a viscosity reducer, a flame retarder, a stabilizer, a stabilization aid, a colorant, a processing aid, a filler, an antioxidant (antiaging agent), an ultraviolet absorber, a light stabilizer, a lubricant, an antistat, and a crosslinking aid.

### (Base Component)

The inorganic filler-containing composition of the present invention may contain a resin as a base component, and examples of the resin include, but not particularly limited to, a polyolefin, a polyester, a polysulfide, a polyvinyl chloride, a modified polysulfide, a silicone resin, a modified silicone resin, an acrylic urethane resin, an epoxy resin, a polyurethane, a polyisocyanate, an acrylic resin, a polyester, and an unsaturated polyester.

The used resin may be determined according to the intended application, and one type of the resin may be used alone or two or more types thereof may be used in combination.

When the resin contained in the inorganic filler-containing composition of the present invention is a polyisocyanate, the fluidity-improving effect of the inorganic filler-containing composition of the present invention can be particularly expected.

A polyisocyanate is a generic term of a resin having an isocyanate group (-N=C=O) in the molecule. An isocyanate group has a high reactivity with a hydroxyl group. However, the modifier for fluidity of an inorganic filler of the present invention has a reduced reactivity with an isocyanate group, and therefore an increase in tackiness of the composition can be reduced.

The base component of the inorganic filler-containing resin composition of the present invention is not limited to a resin, and for a viscous component such as castor oil or asphalt, the modifier for fluidity of an inorganic filler of the present invention may be suitably used.

The content of the base component (the resin and/or the viscous compound) is not particularly limited, but is, for example, from 2 to 150 parts by mass with respect to 100 parts by mass of the inorganic filler, and preferably from 5 to 85 parts by mass with respect to 100 parts by mass of the inorganic filler.

The inorganic filler-containing composition of the present invention may be suitably used as a pasty resin composition that requires fluidity during use.

The modifier for fluidity of an inorganic filler of the present invention can reduce the viscosity of the composition and increase the filling amount of the inorganic filler, and therefore the inorganic filler-containing composition can be applied to a coating material, an adhesive, a structure material, or the like, and is suitable for a structure material in which an increase in filler content is desired (building material) and a polysulfide-based sealing material particularly having a high filler content.

Hereinafter, an example of a composition for each application when the inorganic filler-containing composition of the present invention is used as a pasty resin composition will be described.

### (Structure Material)

Examples of the resin contained in the inorganic filler-containing composition used for the structure material include a polyolefin, a polyurethane, and an unsaturated polyester.

A resin used for the structure material varies depending on application. For example, as a resin component, a polyurethane is mainly used for a water-proof material, and an unsaturated polyester is mainly used for artificial marble.

When the structure material is a water-proof material, the inorganic filler-containing composition used for a water-proof material (hereinafter sometimes simply referred to as "water-proof material composition") is preferably a polyurethane composition that contains, for example, a major agent component containing an isocyanate group-containing compound, a curing agent component containing one or more selected from the group consisting of an aromatic polyamine, a polyol, water, and a moisture.

The isocyanate group-containing compound contained in the major agent component is preferably an isocyanate group-terminated polyurethane prepolymer obtained by reacting a polyisocyanate having a diphenylmethane diisocyanate structure with a polyol.

Examples of the polyisocyanate include 4,4'-diphenylmethane diisocyanate, 2,4'-diphenylmethane diisocyanate, and 2,2'-diphenylmethane diisocyanate. Among these, an isocyanate mixture of 4,4'-diphenylmethane diisocyanate, 2,4'-diphenylmethane diisocyanate, and/or 2,2'-diphenylmethane diisocyanate is preferred.

The polyol is preferably polyoxypropylene polyol, and more preferably polyoxypolypropylene diol alone or a mixture of polyoxypropylene diol and polyoxypropylene triol.

The ratio of polyisocyanate to polyol in the isocyanate group-terminated urethane prepolymer is preferably from 1.8 to 2.5 in terms of the ratio by mole (NCO/OH) of an isocyanate group to a hydroxyl group. The isocyanate group content (NCO group content) in the isocyanate group-terminated urethane prepolymer is preferably from 2 to 5 mass%.

Examples of the aromatic polyamine contained in the curing agent component include 4,4'-methylenebis(2-chloroaniline), dimethylthiotoluenediamine, and diethyltoluenediamine. Among these, 4,4'-methylenebis(2-chloroaniline) is known as "MOCA" and widely used.

The polyol contained in the curing agent component is preferably polyether polyol, and particularly preferably polyoxypropylene polyol. The number of functional groups of this polyol is preferably from 2 to 4, and more preferably from 2 to 3.

When the polyurethane is two-component curing type, the mixing ratio of the major agent to the curing agent is, for example, from 1.0 to 2.0, preferably from 1.0 to 1.8, and more preferably from 1.0 to 1.3 in terms of the ratio by mole (NCO/(NH₂+OH)) of the isocyanate group contained in the major agent to an active hydrogen-containing group contained in the curing agent.

The curing agent component preferably includes an inorganic filler. Examples of the inorganic filler include calcium carbonate, talc, clay, silica, and carbon.

The content of the inorganic filler in the polyurethane composition is, for example, from 10 to 60 parts by mass, and preferably from 20 to 50 parts by mass, with respect to 100 parts by mass of the resin component. When the content of the inorganic filler is within the aforementioned range, the curing properties of the composition and the performance of the obtained water-proof material can be well balanced.

In the case of a two-component curing type polyurethane, the viscosities of both the major agent and the curing agent are generally high (major agent: for example, 7 to 10 Pa·S, curing agent: for example, 10 to 30 Pa·S), and the viscosities are further increased at winter, which is a low air temperature. Therefore, the modifier for fluidity of an inorganic filler of the present invention that can enhance the dispersibility of the inorganic filler and increase the content is useful.

The modifier for fluidity of an inorganic filler of the present invention may be contained in the water-proof material composition. For example, in the case of the two-component curing type polyurethane, the modifier for fluidity of an inorganic filler of the present invention needs to be contained in at least one of the major agent component and the curing agent component.

In order to promote a urethane formation reaction, the curing agent component may include a publicly known curing catalyst. Examples of the curing catalyst include organic acid lead, organic acid tin, and a tertiary amine compound.

In addition to the inorganic filler and the curing catalyst, the curing agent may include a pigment such as the viscosity reducer, the plasticizer, chromium oxide, titanium oxide, or phthalocyanine; or a stabilizer such as an antioxidant, an ultraviolet absorbing material, or a dehydrant.

Examples of the water-proof material obtained by molding the water-proof material composition include a water-proof material for roofs.

The water-proof material for roofs is obtained, for example, by applying a composition in which the major agent component and the curing agent component are mixed to a desired portion, forming a coating film, and performing a reaction resulting in curing.

### (Sealing Material)

A polysulfide-based resin used for the polysulfide-based sealing material is not particularly limited as long as it is a resin having a sulfide bond in the molecule, and examples thereof include a polysulfide-based resin having a sulfide bond bonded to a hydrocarbon group, such as an alkyl group. The polysulfide-based resin may have, for example, an ether bond, an ester bond, an amide bond, or an imide group, in the skeleton.

The polysulfide-based resin having an ether bond in the skeleton is a polysulfide polyether resin. The polysulfide resin may have, for example, a functional group such as a thiol group, a hydroxy group, or an amino group on one end or both ends.

Examples of the polysulfide-based resin include a polysulfide-based resin including a structural unit represented by -(C₂H₄OCH₂OC₂H₄-Sₓ)- (wherein x is an integer of 1 to 5) in a main chain and having a thiol group represented by C₂H₄OCH₂OC₂H₄-SH.

The polysulfide-based resin preferably has fluidity at room temperature, specifically at 25°C. The number average molecular weight (Mn) of the polysulfide-based resin is generally from 100 to 200,000, and preferably from 400 to 50,000 or less.

Examples of the polysulfide-based resin include a polysulfide polyether resin. Examples of the polysulfide polyether resin include a polysulfide polyether resin having a thiol group, and specific examples thereof include those having a polyether moiety represented by (1) "-(R¹O)ₙ" (where R¹ is an alkylene group having 2 to 4 carbon atoms and n is an integer of 6 to 200) in a main chain, a structural unit represented by (2) "-C₂H₄OCH₂OC₂H₄-3ₓ-" and (3) "-CH₂CH(OH)CH₂-Sₓ-" (where x is an integer of 1 to 5), and a thiol group represented by (4) "-C₂H₄OCH₂OC₂H₄-SH" or "-CH₂CH(OH)CH₂-SH" at an end.

The number average molecular weight of the polysulfide polyether resin is generally from 600 to 200,000, and preferably from 800 to 50,000.

A method for producing the polysulfide-based resin is not limited, and the polysulfide-based resin produced by a variety of publicly known method may be used. A commercially available polysulfide-based resin may be used. Examples of the commercially available polysulfide-based resin include "Thiokol LP-23 and LP-32" (manufactured by Toray Fine Chemicals Co., Ltd.), and "Thioplast polymer" (manufactured by Akzo Nobel N.V.). The polysulfide-based resin may be used alone or two or more types thereof may be used in combination.

For the polysulfide-based sealing material containing the modifier for fluidity of an inorganic filler of the present invention, various additives may be used in combination. Examples of the additive include the viscosity reducer, the plasticizer, an adhesiveness-imparting agent, a pigment, a dye, an antiaging agent, an antioxidant, an antistat, a flame retarder, a tackifying resin, a stabilizer, and a dispersant.

The adhesiveness-imparting agent is suitably a silane coupling agent such as an aminosilane since it has particularly an excellent adhesiveness-improving effect on a glass surface and is a general-purpose compound.

Examples of the aminosilane include 3-aminopropyltrimethoxysilane, 3-aminopropyltriethoxysilane, 3-aminopropylmethyldimethoxysilane, 3-aminopropylethyldiethoxysilane, bis(trimethoxysilyl)propylamine, bis(triethoxysilyl)propylamine, bis(methoxydimethoxysilyl)propylamine, bis(ethoxydiethoxysilyl)propylamine, N-2-(aminoethyl)-3-aminopropyltrimethoxysilane, N-2-(aminoethyl)-3-aminopropylmethyldimethoxysilane, N-2-(aminoethyl)-3-aminopropyltriethoxysilane, and N-2-(aminoethyl)-3-aminopropylethyldiethoxysilane.

Examples of the pigment include organic pigments such as an azo pigment and a copper phthalocyanine pigment.

Examples of the dye include a black dye, a yellow dye, a red dye, a blue dye, and a brown dye.

Examples of the antiaging agent include a hindered phenol-based compound and a hindered amine-based compound.

Examples of the antioxidant include butylhydroxytoluene (BHT) and butylhydroxyanisole (BHA).

Examples of the antistat include a quaternary ammonium salt; and hydrophilic compounds such as polyglycol and an ethylene oxide derivative.

Examples of the flame retardant include chloroalkyl phosphate, dimethyl methylphosphonate, bromine-phosphorus compounds, ammonium polyphosphate, neopentylbromide-polyether, and brominated polyether.

Examples of the tackifying resin include a terpene resin, a phenolic resin, a terpene-phenolic resin, a rosin resin, a xylene resin, an epoxy resin, alkyl titanates, and organic polyisocyanates.

Examples of the stabilizer include a fatty acid silyl ester and a fatty acid amide trimethylsilyl compound.

The dispersant refers to a substance for converting a solid into fine particles and dispersing the fine particles in a liquid, and examples thereof include sodium hexametaphosphate, condensed sodium naphthalenesulfonate, and a surfactant.

The polysulfide-based sealing material is generally mixed with a curing agent just before use and used. As the curing agent, for example, a curing agent generally used for the polysulfide resin-based sealing material, such as a metal oxide, a metal peroxide, an organic or inorganic oxidizing agent, an epoxy compound, or an isocyanate compound may be used. Among these, a metal peroxide such as lead oxide or manganese dioxide is preferred, and manganese dioxide is more preferred. The modifier for fluidity of the present invention is preferably mixed in this curing agent and used.

When manganese dioxide is used as the curing agent, it is preferable that the usage amount of manganese dioxide be preferably from 2.5 to 25 parts by mass, and more preferably from 3 to 20 parts by mass, with respect to 100 parts by mass of polysulfide resin used as the major agent. This is because curing is sufficient and a cured product having appropriate elasticity is obtained.

The curing agent may also contain another filler, a plasticizer, a curing accelerator, or a silane coupling agent.

A curing condition using the sealing material is generally 20 to 25°C after the major agent and the curing agent are mixed. The curing time is generally from 24 to 168 hours.

The inorganic filler-containing composition of the present invention is not limited to the aforementioned pasty resin composition, and may be suitably used as a resin composition for molding such as injection molding or extrusion molding.

The resin composition for molding has various properties, and the resin composition for molding is a liquid in a stage before molding (at normal temperature) or becomes a liquid under heating during molding. Since the modifier for fluidity of an inorganic filler of the present invention can improve the fluidity of the inorganic filler, an excessive increase in viscosity due to the contained inorganic filler can be suppressed, and melt-kneading and the like can be smoothly performed.

The addition amount of the inorganic filler may be increased, and therefore the modifier for fluidity of an inorganic filler of the present invention can be suitably used for the resin composition for molding of an automotive member, an absorbent sanitary article, a building material, stone paper, a heat-dissipating member, or the like in which an improvement in physical properties by an increase in addition amount of the inorganic filler is desired.

Hereinafter, an example of a composition for each application when the inorganic filler-containing composition of the present invention is used as a resin composition for molding will be described.

### (Automotive Member)

A resin component contained in the resin composition for molding used for an automotive member (hereinafter sometimes simply referred to as "resin composition for automotive members") is, for example, a thermoplastic resin. Of the thermoplastic resin, a polypropylene resin having features such as excellent moldability, high mechanical strength, and cost efficiency is preferred.

The polypropylene is not particularly limited, but a polypropylene resin having a MFR (230°C, 2.16 kg) of 60 to 120 g/10 minutes is preferred.

The resin composition for automotive members may further contain an olefin-based thermoplastic elastomer as a resin component. The olefin-based thermoplastic elastomer is not particularly limited, but an olefin-based thermoplastic elastomer containing an ethylene-α-olefin copolymer is preferred.

Examples of the inorganic filler contained in the resin composition for automotive members include talc, calcium carbonate, whisker (a material for the whisker includes graphite, potassium titanate, alumina, silicon carbide, silicon nitride, mullite, magnesia, magnesium borate, aluminum borate, magnesium sulfate, zinc oxide, or titanium boride), carbon nanofiber, carbon nanotube, kaolin clay, and mica.

The resin composition for automotive member may contain the modifier for fluidity of an inorganic filler of the present invention and various additives other than the inorganic filler. Examples of the additive include the viscosity reducer, the plasticizer, an antioxidant, an ultraviolet absorber, a light stabilizer, a flame retarder, and a colorant.

The composition ratio of the resin component, the inorganic filler, and the modifier for fluidity of an inorganic filler contained in the resin composition for automotive members is not particularly limited, but the adjustment to a composition that satisfies one or more physical properties among the following physical properties is preferred.

MFR (230°C, 2.16 kg, JIS-K7210-1) of the resin composition for automotive members is preferably 20 g/10 minutes or more, and more preferably from 20 to 30 g/10 minutes.

The linear expansion coefficient (JIS-K7197) of the resin composition for automotive members is preferably 5.0×10⁻⁵ /K or less, and more preferably 4.0 to 5.0×10⁻⁵ /K.

The tensile elastic modulus (JIS-K7161) of the resin composition for automotive members is preferably 2.5 GPa or more, and more preferably from 2.5 to 3.0 GPa.

The Charpy impact value (JIS-K7111) of the resin composition for automotive members is preferably 30 kJ/m² or more, and more preferably from 30 to 40 kJ/m².

Examples of an automotive member obtained by molding the resin composition for automotive members include an engine hood, a fender, a bumper, a door, a trunk lid, a roof, a radiator grill, a wheel cap, an instrument panel, and a pillar garnish.

The automotive members can be manufactured by injection molding the resin composition for automotive members.

### (Absorbent Sanitary Article)

A resin component contained in the resin composition for molding used for absorbent sanitary articles (hereinafter sometimes simply referred to as "resin composition for absorbent sanitary articles") is, for example, a polyolefin. Of the polyolefin, one or more selected from the group consisting of a polyethylene and a polypropylene are preferred, and a polyethylene is more preferred.

When a polyethylene is used as the resin component, for example, two or more types of polyethylenes having different densities may be used.

A polyolefin that is the resin component of the resin composition for absorbent sanitary articles is not particularly limited, but MFR (190°C, 2.16 kgf) is preferably from 0.1 to 20 g/10 minutes, and more preferably from 0.5 to 5 g/10 minutes.

When MFR is 0.1 g/10 minutes or more, the moldability of a thin film can be sufficiently held. When MFR is 20 g/10 minutes or less, sufficient strength can be achieved.

The resin composition for absorbent sanitary articles may further contain a polystyrene-based elastomer as the resin component.

Examples of the polystyrene-based elastomer include elastomers having a styrene block, such as a styrene-olefin-based elastomer (SEP, SEBC, etc.), a styrene-olefin-styrene-based elastomer (SEPS, SEBS, etc.), a styrene-diene-based elastomer (SIS, SBS, etc.), and a hydrogenated styrene-diene-based elastomer (HSIS, HSBR, etc.).

The amount of the styrene component in the polystyrene-based elastomer is preferably from 10 to 40 mass%, and more preferably from 20 to 40 mass%.

Examples of an inorganic filler contained in the resin composition for absorbent sanitary articles include calcium carbonate, calcium sulfate, barium carbonate, and titanium oxide. One or more selected from the group consisting of calcium carbonate and barium sulfate are preferred.

The shape of the inorganic filler is not particularly limited, but is preferably granular. Fine particles having an average particle diameter of 0.1 to 10 µm is more preferred, fine particles having an average particle diameter of 0.3 to 5 µm is further preferred, and fine particles having an average particle diameter of 0.5 to 3 µm is particularly preferred.

The content of the inorganic filler in the resin composition for absorbent sanitary articles satisfies, for example, preferably a ratio of the polyolefin to the inorganic filler of 60 to 20 parts by mass to 40 to 80 parts by mass, more preferably a ratio of the polyolefin to the inorganic filler of 55 to 25 parts by mass to 45 to 75 parts by mass, and further preferably a ratio of the polyolefin to the inorganic filler of 50 to 30 parts by mass to 50 to 70 parts by mass.

When the content of the inorganic filler satisfies the aforementioned range, all the moisture permeability, the air permeability, and the resistance to liquid permeability of the obtained absorbent sanitary article can be sufficiently held.

The resin composition for absorbent sanitary articles may contain the modifier for fluidity of an inorganic filler of the present invention and various additives other than the inorganic filler, and examples of the additive include the plasticizer, a viscosity reducer, a compatibilizer, a processing aid, an antioxidant, a thermal stabilizer, a light stabilizer, an ultraviolet absorber, an antiblocking agent, an antifogging agent, a flatting agent, a surfactant, an anti-microbial agent, a deodorant, an antistat, a water repellent, an oil repellent, a radiation-shielding agent, a colorant, and a pigment.

A molded article obtained by molding the resin composition for absorbent sanitary articles can be suitably used as a backsheet (a sheet that has air permeability and moisture permeability, but cannot transmit a liquid) used for an absorbent sanitary article such as a disposable diaper and a sanitary napkin.

The backsheet can be produced, for example, by meltkneading the resin composition for absorbent sanitary articles, molding a sheet through a T-die process or a blown extrusion process, and monoaxially or biaxially stretching the resultant sheet.

### (Stone Paper)

The stone paper is a sheet including calcium carbonate derived from limestone and polyolefin (polyethylene, polypropylene, etc.). Water and wood are not required for molding of the sheet and limestone that is a raw material is almost inexhaustibly present on the earth, and therefore the sheet is excellent in sustainability.

Although the stone paper contains a large amount of calcium carbonate, the modifier for fluidity of an inorganic filler of the present invention can enhance the fluidity of calcium carbonate, which can enhance sheet physical properties.

The stone paper can be produced, for example, by meltkneading a stone paper composition containing calcium carbonate, polyolefin, and the modifier for fluidity of an inorganic filler of the present invention, followed by blown extrusion molding or extrusion molding.

In the stone paper, the content of calcium carbonate satisfies, for example, a mass ratio of polyolefin to calcium carbonate (polyolefin:calcium carbonate) of 85:15 to 20:80, preferably 85:15 to 30:70, more preferably 85:15 to 35:65, and further preferably 80:20 to 40:60.

The stone paper composition may further contain the plasticizer, a viscosity reducer, a foaming agent, a coloring agent, a lubricant, a coupling agent, a stabilizer (an antioxidant, an ultraviolet absorber, etc.), an antistat, or the like as an adjuvant.

Examples of the foaming agent include aliphatic hydrocarbon compounds such as propane, n-butane, isobutane, n-pentane, isopentane, and hexane; alicyclic hydrocarbon compounds such as cyclohexane, cyclopentane, and cyclobutane; and halogenated hydrocarbon compounds such as trifluoromonochloroethane and difluorochloromethane.

Examples of the lubricant include fatty acid-based lubricants such as stearic acid, hydroxystearic acid, complex stearic acid, and oleic acid; aliphatic amide-based lubricants such as an aliphatic alcohol-based lubricant, stearamide, oxystearamide, oleylamide, erucylamide, ricinolamide, behenamide, methylolamide, methylenebisstearamide, methylenebisstearbehenamide, higher fatty acid bisamide, and complex amide; aliphatic ester-based lubricants such as n-butyl stearate, methyl hydroxystearate, a polyhydric alcohol fatty acid ester, a saturated fatty acid ester, and ester-based wax; and fatty acid metallic soap-based lubricants.

As the antioxidant, a phosphorus-based antioxidant, a phenol-based antioxidant, a pentaerythritol-based antioxidant, or the like may be used.

Examples of the phosphorus-based antioxidant include phosphites including triesters, diesters, and monoesters of phosphorous acid, such as triphenylphosphite, tris(nonylphenyl)phosphite, and tris(2,4-di-tert-butylphenyl)phosphite; and phosphates such as trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

Examples of the phenol-based antioxidant include α-tocopherol, butyl hydroxy toluene, sinapyl alcohol, vitamin E, n-octadecyl 3-(3,5-di-tert-butyl-4-hydroxyphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, and tetrakis[3-(3,5-di-tert-butyl-4-hydroxyphenyl)propionyloxymethyl]methane.

### (Heat-dissipating Member)

Electronic appliances such as a personal computer, a smartphone, and a television have an increased heating power with an increase in performance, and therefore a heat-dissipating member including a thermally conductive filler is often used to efficiently dissipate generated heat. Further, automobiles such as an electric automobile and a hybrid automobile have many electronic appliances, and therefore a heat-dissipating member including a thermally conductive filler is often used.

A resin component contained in the resin composition for molding used for the heat-dissipating member (hereinafter sometimes simply referred to as "resin composition for heat-dissipating members") is, for example, a thermosetting resin, an active energy ray-curable resin, or a thermoplastic resin.

As a thermosetting resin of the resin composition for heat-dissipating members, a publicly known thermosetting resin may be used. Examples thereof include novolak type phenolic resins such as a phenol novolak resin and a cresol novolak resin; phenolic resins such as an unmodified resol phenolic resin, and a resol type phenolic resin such as an oil-modified resol phenolic resin modified by tung oil, linseed oil, or walnut oil; bisphenol type epoxy resins such as a bisphenol A type epoxy resin and a bisphenol F type epoxy resin; novolak type epoxy resins such as an aliphatic chain-modified bisphenol type epoxy resin, a novolak epoxy resin, and a cresol novolak epoxy resin; epoxy resins such as a biphenyl type epoxy resin and a polyalkylene glycol type epoxy resin; resins having a triazine ring such as a urea resin and a melamine resin; vinyl resins such as a (meth)acrylic resin and a vinyl ester resin; an unsaturated polyester resin, a bismaleimide resin, a polyurethane resin, a diallyl phthalate resin, a silicone resin, a resin having a benzoxazine ring, and a cyanate ester resin.

The thermosetting resin may be used with a curing agent.

Examples of a curing agent used with the thermosetting resin include amine-based compounds such as diaminodiphenylmethane, diethylenetriamine, triethylenetetramine, diaminodiphenyl sulfone, isophoronediamine, imidazole, a BF₃-amine complex, and a guanidine derivative; amide compounds such as dicyandiamide and a polyamide resin synthesized from a dimer of linolenic acid and ethylenediamine; acid anhydride-based compounds such as phthalic anhydride, trimellitic anhydride, pyromellitic anhydride, maleic anhydride, tetrahydrophthalic anhydride, methyltetrahydrophthalic anhydride, methyl nadic anhydride, hexahydrophthalic anhydride, and methylhexahydrophthalic anhydride; phenol-based compounds such as a phenol novolak resin, a cresol novolak resin, an aromatic hydrocarbon formaldehyde resin-modified phenolic resin, a dicyclopentadiene phenol-added resin, a phenolaralkyl resin (xylok resin), a resorcin novolak resin, a naphthol aralkyl resin, a trimethylolmethane resin, a tetraphenylolethane resin, a naphthol novolak resin, a naphthol-phenol co-condensed novolak resin, a naphtholcresol co-condensed novolak resin, a biphenyl-modified phenolic resin, a biphenyl-modified naphthol resin, an aminotriazine-modified phenolic resin, and an alkoxy group-containing aromatic ring-modified novolak resin.

As a thermoplastic resin of the resin composition for heat-dissipating members, a publicly known thermoplastic resin may be used. Examples thereof include a polyethylene resin, a polypropylene resin, a polymethyl methacrylate resin, a polyvinyl acetate resin, an ethylene-propylene copolymer, an ethylene-vinyl acetate copolymer, a polyvinyl chloride resin, a polystyrene resin, a polyacrylonitrile resin, a polyamide resin, a polycarbonate resin, a polyacetal resin, a polyethylene terephthalate resin, a polyphenylene oxide resin, a polyphenylene sulfide resin, a polysulfone resin, a polyether sulfone resin, a polyetherether ketone resin, a polyallyl sulfone resin, a thermoplastic polyimide resin, a thermoplastic urethane resin, a polyaminobismaleimide resin, a polyamideimide resin, a polyetherimide resin, a bismaleimide triazine resin, a polymethylpentene resin, a fluoride resin, a liquid crystal polymer, an olefin-vinyl alcohol copolymer, an ionomer resin, a polyarylate resin, an acrylonitrile-ethylene-styrene copolymer, an acrylonitrile-butadienestyrene copolymer, and an acrylonitrile-styrene copolymer.

Examples of the thermally conductive filler contained in the resin composition for heat-dissipating members include alumina, aluminum hydroxide, magnesium hydroxide, calcium carbonate, magnesium carbonate, calcium silicate, calcium oxide, magnesium oxide, zinc oxide, beryllia, aluminum oxide, aluminum nitride, boron nitride, a hydrous metal compound, molten silica, crystalline silica, noncrystalline silica, silicon carbide, silicon nitride, titanium carbide, and diamond.

The thermally conductive filler that is surface-treated with a silane-based, titanate-based, or aluminate-based coupling agent, or the like.

The shape of the thermally conductive filler is not particularly limited, and may be a spherical, needle, flaky, dendrite, or fibrous shape.

The content of the thermally conductive filler in the resin composition for heat-dissipating members can be appropriately adjusted according to application. The content of the thermally conductive filler is preferably from 30 to 5,000 parts by mass with respect to 100 parts by mass of the resin component.

The resin composition for heat-dissipating members may contain the modifier for fluidity of an inorganic filler of the present invention and various additives other than the thermally conductive filler. Examples of the additive include a dye, a pigment, an antioxidant, a polymerization inhibitor, an anti-foaming agent, a leveling agent, an ion collecting agent, a moisturizer, a viscosity adjuster, an antiseptic, an anti-microbial agent, an antistat, an antiblocking agent, an ultraviolet absorber, and an infrared absorber.

When the resin composition for heat-dissipating members contains the thermosetting resin, a heat-dissipating member can be molded by heating the resin composition for heat-dissipating members. When the resin composition for heat-dissipating members contains an active energy ray-curable resin, curing and molding can be achieved by irradiation with an active energy ray such as ultraviolet light or infrared light. When the resin composition for heat-dissipating members contains a thermoplastic resin, a heat-dissipating member can be obtained by a publicly known molding method such as injection molding, extrusion molding, or pressing molding.

The heat-dissipating member obtained by molding the resin composition for heat-dissipating members may be used as a heat sink. The heat-dissipating member obtained by molding the resin composition for heat-dissipating members may be used as a heat-dissipating junction member that connects a member to be heat-dissipated to a metal heat-dissipating member.

The resin composition for heat-dissipating members may also be used as a semiconductor sealing material.

### (Heat-Conductive Silicone Sheet)

Among the heat-dissipating members, a heat-conductive silicone sheet using a silicone resin is actively used for a heat-dissipating member of an electric automobile, a mobile terminal, a wearable terminal, or the like due to its light weight and high thermal conductivity. When an inorganic filler is highly dense, the heat-conductive silicone sheet has a problem in that the flexibility of the sheet is deteriorated and the sheet is difficult to mount. When the modifier for fluidity of an inorganic filler of the present invention is used to deal with this problem, the fluidity of a thermally conductive inorganic filler that is highly dense can be maintained to hold the flexibility of the sheet. Thus, a sheet having high thermal conductivity and excellent flexibility can be obtained.

The heat-conductive silicone sheet of the present invention is a heat-conductive silicone sheet including a silicone resin, an inorganic filler, and the modifier for fluidity of an inorganic filler of the present invention, wherein the inorganic filler is one or more selected from the group consisting of magnesium oxide, alumina, and aluminum hydroxide.

In the heat-conductive silicone sheet of the present invention, the mass ratio (silicone resin:inorganic filler) of the silicone resin to the inorganic filler is from 50:50 to 1:99, and the content of the modifier for fluidity of an inorganic filler is from 0.1 to 5 parts by mass with respect to a total amount of the silicone resin and the inorganic filler of 100 parts by mass.

The heat-conductive silicone sheet of the present invention can hold high flexibility even when the inorganic filler is highly dense, and the heat-conductive silicone sheet satisfies H₉₀/H₈₀≤1.30 in which H₈₀ is a Shore A hardness of the heat-conductive silicone sheet when the mass ratio (silicone resin:inorganic filler) of the silicone resin to the inorganic filler is 20:80, and H₉₀ is a Shore A hardness of the heat-conductive silicone sheet when the mass ratio (silicone resin:inorganic filler) of the silicone resin to the inorganic filler is 10:90.

The lower limit of H₉₀/H₈₀ is, for example, 1.0, and the Shore A hardness is measured by a method described in Examples.

As a silicone resin of the heat-conductive silicone sheet of the present invention, a publicly known silicone resin used for a heat-conductive silicone sheet may be used. Examples thereof include a silicone resin obtained by addition through a hydrosilylation reaction of an alkenyl group-containing organopolysiloxane and an organohydrogenpolysiloxane.

The alkenyl group-containing organopolysiloxane is preferably an organopolysiloxane having two or more alkenyl groups bonded to a silicon atom per molecule, and is a major agent of a silicone resin. In general, the main chain portion basically includes repeated diorganosiloxane units, but may have a branched structure in part of the molecular structure or may be a cyclic structure. From the viewpoint of physical properties such as the mechanical strength of a cured product, a linear diorganopolysiloxane is preferred.

Examples of the alkenyl group include alkenyl groups having 2 to 8 carbon atoms, such as a vinyl group, an allyl group, a propenyl group, an isopropenyl group, a butenyl group, a hexenyl group, and a cyclohexenyl group. Among these, a vinyl group and an allyl group are preferred, and a vinyl group is more preferred.

Examples of a group other than the alkenyl group bonded to a silicon atom of the alkenyl group-containing organopolysiloxane include alkyl groups having 1 to 10 carbon atoms and aryl groups having 6 to 18 carbon atoms, and the alkyl groups and the aryl groups may be further substituted by a halogen atom and/or a cyano group.

Specific examples of the group other than the alkenyl group bonded to a silicon atom of the alkenyl group-containing organopolysiloxane include a methyl group, an ethyl group, a propyl group, a chloromethyl group, a bromoethyl group, a 3,3,3-trifluoropropyl group, a cyanoethyl group, a phenyl group, a chlorophenyl group, and a fluorophenyl group.

The alkenyl group-containing organopolysiloxane is preferably an organopolysiloxane having two or more alkenyl groups per molecule. From the viewpoint of improving the flexibility of a resultant cured product, it is more preferably an organopolysiloxane in which an alkenyl group is bonded to only a silicon atom at an end of the molecular chain, and further preferably an organopolysiloxane having a structure represented by the following general formula (2).

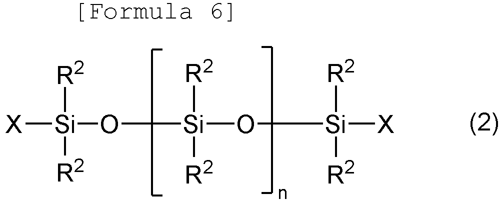

(In the general formula (2),
R²s are each independently an alkyl group having 1 to 3 carbon atoms or a phenyl group,
Xs are each independently a vinyl group, an allyl group, a propenyl group, an isopropenyl group, a butenyl group, a hexenyl group, or a cyclohexenyl group, and
n is an integer of 1 or more.)

The molecular weight of the alkenyl group-containing organopolysiloxane is a molecular weight when a kinematic viscosity at 25°C is from 10 to 100,000 mm²/s, and preferably a molecular weight when the kinematic viscosity is from 300 to 50,000 mm²/s.

The kinematic viscosity is a value at 25°C measured with an Ostwald viscometer.

The aforementioned organohydrogenpolysiloxane is an organohydrogenpolysiloxane having two or more, and preferably 2 to 100 hydrogen atoms directly bonded to silicon atoms (Si-H groups) per molecule, and acts as a cross-linker of the alkenyl group-containing organopolysiloxane. That is, the Si-H groups of the organohydrogenpolysiloxane and the alkenyl groups of the alkenyl group-containing organopolysiloxane are subjected to a hydrosilylation reaction to obtain a silicone resin having a three-dimensional net structure.

The organohydrogenpolysiloxane is, for example, an organohydrogenpolysiloxane having a structure represented by the following general formula (3).

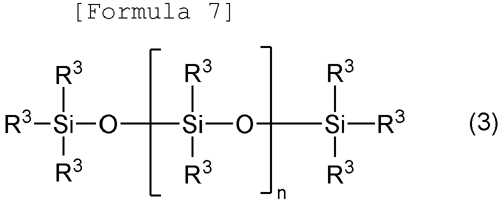

(In the general formula (3),
R³s are each independently a hydrogen atom or a monovalent group having no aliphatic unsaturated bond, at least two Rs are a hydrogen atom, and
n is an integer of 1 or more.)

Examples of the monovalent group having no aliphatic unsaturated bond include an alkyl group having 1 to 10 carbon atoms, an aryl group having 6 to 18 carbon atoms, and an aralkyl group having 7 to 18 carbon atoms, and the alkyl group, the aryl group, and the aralkyl group may be further substituted by a halogen atom and/or a cyano group.

Specific examples of the monovalent group having no aliphatic unsaturated bond include a methyl group, an ethyl group, a chloromethyl group, a bromoethyl group, a 3,3,3-trifluoropropyl group, a cyanoethyl group, a phenyl group, a chlorophenyl group, and a fluorophenyl group.

In the general formula (3), n is an integer of 1 or more, and preferably an integer of 1 to 200.

When a silicone resin is obtained by a hydrosilylation reaction of the alkenyl group-containing organopolysiloxane and the organohydrogenpolysiloxane, the reaction ratio of the alkenyl group-containing organopolysiloxane to the organohydrogenpolysiloxane is an amount in which the number of the Si-H groups of the organohydrogenpolysiloxane with respect to one alkenyl group of the alkenyl group-containing organopolysiloxane is from 0.2 to 2.0, preferably from 0.3 to 1.5, and further preferably from 0.5 to 1.0.

During the hydrosilylation reaction of the alkenyl group-containing organopolysiloxane and the organohydrogenpolysiloxane, the hydrosilylation reaction may be promoted using a platinum group metal-based curing catalyst, if necessary.

The used platinum group metal-based curing catalyst may be a publicly known catalyst. H₂PtCl₄·nH₂O, H₂PtCl₆·nH₂O, NaHPtCl₆·nH₂O, KaHPtCl₆·nH₂O, Na₂PtCl₆·nH₂O, K₂PtCl₄·nH₂O, PtCl₄·nH₂O, PtCl₂, Na₂HPtCl₄·nH₂O (wherein n is an integer of 0 to 6), or the like may be used.

The heat-conductive silicone sheet of the present invention can be produced by curing a silicone sheet composition containing a silicone resin component (e.g., the alkenyl group-containing organopolysiloxane and the organohydrogenpolysiloxane), an inorganic filler, and the modifier for fluidity of an inorganic filler of the present invention at 100 to 150°C for 1 to 20 minutes under pressing.

The silicone sheet can be cured while the silicone sheet composition is disposed between two resin films. The resin films may be appropriately selected from a resin film that can withstand a heat treatment after bonding and has a heat distortion temperature of 100°C or higher, for example, films of PET, PBT, and polycarbonate, and used.

The silicone sheet composition needs to contain a silicone resin component, an inorganic filler, and the modifier for fluidity of an inorganic filler of the present invention, and a reaction controlling agent, an internal release agent, a colorant, an antioxidant, or the like may be blended as long as the effects of the present invention are not impaired.

The thickness of the silicone sheet may be appropriately determined according to application, and may be appropriately set, for example, to the range of 0.1 to 10 mm.

### Examples

Hereinafter, the present invention will be specifically described by Examples and Comparative Examples.

The present invention is not limited to the following examples.

In Examples of the present application, an acid value and a hydroxyl value are values evaluated by the following methods.

### [Method for Measuring Acid Value]

An acid value was measured by a method in accordance with JIS K0070-1992.

### [Method for Measuring Hydroxyl Value]

A hydroxyl value was measured by a method in accordance with JIS K0070-1992.

In Examples of the present application, the number average molecular weight of a polyester was a value calculated in terms of polystyrene on the basis of GPC measurement, and measurement conditions are as described below.

### [GPC Measurement Conditions]

Measuring apparatus: High-speed GPC device "HLC-8320GPC" manufactured by Tosoh Corporation
Column: "TSK GURDCOLUMN SuperHZ-L" manufactured by Tosoh Corporation + "TSK gel SuperHZM-M" manufactured by Tosoh Corporation + "TSK gel SuperHZM-M" manufactured by Tosoh Corporation + "TSK gel SuperHZ-2000" manufactured by Tosoh Corporation + "TSK gel SuperHZ-2000" manufactured by Tosoh Corporation
Detector: RI (differential refractometer)
Data processing: "EcoSEC Data Analysis version 1.07" manufactured by Tosoh Corporation
Column temperature: 40°C
Developing solvent: Tetrahydrofuran
Flow rate: 0.35 mL/min
Measurement sample: A measurement sample was obtained by dissolving 7.5 mg of sample in 10 mL of tetrahydrofuran, and filtering the obtained solution through a microfilter.
Injection volume of sample: 20 µL
Standard sample: a monodisperse polystyrene having a known molecular weight was used in accordance with a measurement manual of "HLC-8320GPC" described above.

### (Monodisperse Polystyrene)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Synthesis Example 1: synthesis of modifier for fluidity A)

In a 2-liter four-necked flask equipped with a thermometer, a stirrer, and a reflux condenser, 358 g of 3-methyl-1,5-pentanediol (hereinafter abbreviated as "3MPD") as a glycol component, 496 g of adipic acid (hereinafter abbreviated as "AA") as a dicarboxylic acid component, 58 g of isononyl alcohol (hereinafter abbreviated as "INA") as an alcohol component, and 0.03 g of tetraisopropyl titanate (hereinafter abbreviated as "TIPT") as a catalyst were placed. While the mixture was stirred under nitrogen stream flow, a temperature was increased in a stepwise manner to 220°C over 6 hours. When the temperature reached 220°C, a reaction was allowed to proceed for 16 hours. A hydroxyl value of less than 9.0 mg KOH/g was confirmed, and the unreacted raw material and a low volatile component were then removed under reduced pressure at 200°C to obtain a modifier for fluidity A that was a polyester.

The obtained modifier for fluidity A was a pale yellow liquid at normal temperature, had an acid group of 33 mg KOH/g, a hydroxyl value of 4 mg KOH/g, and a number average molecular weight of 2,430.

### (Synthesis Example 2: synthesis of modifier for fluidity B)

In a 3-liter four-necked flask equipped with a thermometer, a stirrer, and a reflux condenser, 556 g of 3MPD as a glycol component, 1,102 g of sebacic acid (hereinafter abbreviated as "SebA") as a dicarboxylic acid component, 116 g of INA as an alcohol component, and 0.05 g of TIPT as a catalyst were placed. While the mixture was stirred under nitrogen stream flow, a temperature was increased in a stepwise manner to 220°C over 6 hours. When the temperature reached 220°C, a reaction was allowed to proceed for 12 hours. A hydroxyl value of less than 9.0 mg KOH/g was confirmed, and the unreacted raw material and a low volatile component were then removed under reduced pressure at 200°C to obtain a modifier for fluidity B that was a polyester.

The obtained modifier for fluidity B was a pale yellow liquid at normal temperature, had an acid group of 40 mg KOH/g, a hydroxyl value of 6 mg KOH/g, and a number average molecular weight of 2,200.

### (Comparative Synthesis Example 1 synthesis of modifier for fluidity A')

In a 2-liter four-necked flask equipped with a thermometer, a stirrer, and a reflux condenser, 561 g of 3MPD as a glycol component, 809 g of SebA as a dicarboxylic acid component, and 0.04 g of TIPT as a catalyst were placed. While the mixture was stirred under nitrogen stream flow, a temperature was increased in a stepwise manner to 220°C over 5 hours. When the temperature reached 220°C, a reaction was allowed to proceed for 12 hours. At that time, the acid value of the reaction product was 2 or less, and the hydroxyl value thereof was 58. The temperature was reduced to 125°C, and 67 g of maleic anhydride was added to the reaction system. A reaction was allowed to proceed at 125°C for 3 hours, and the elimination of maleic anhydride was confirmed by IR. Thus, a modifier for fluidity A' that was a polyester was obtained.

The obtained modifier for fluidity A' was a pale yellow liquid at normal temperature, had an acid group of 33 mg KOH/g, a hydroxyl value of 27 mg KOH/g, and a number average molecular weight of 2,450.

### (Synthesis Example 3: synthesis of modifier for fluidity C)

In a 0.5-liter four-necked flask equipped with a thermometer, a stirrer, and a reflux condenser, 300 g of the modifier for fluidity A' and 22 g of acetic anhydride were placed, and a reaction was allowed to proceed at 100°C for 6 hours. After that, 15 g of ion exchanged water was added at 60°C, and a reaction was allowed to proceed for 1 hour. Subsequently, pressure reduction was initiated, the temperature was increased to 120°C in a stepwise manner to complete dehydration. Thus, a modifier for fluidity C that was a polyester was obtained.

The obtained modifier for fluidity C was a pale yellow liquid at normal temperature, had an acid group of 34 mg KOH/g, a hydroxyl value of 6 mg KOH/g, and a number average molecular weight of 2,520.

### (Synthesis Example 4: synthesis of modifier for fluidity D)

In a 5-liter four-necked flask equipped with a thermometer, a stirrer, and a reflux condenser, 676 g of 1,4-butylene glycol and 782 g of neopentylglycol as glycol components, 2,456 g of adipic acid as a dicarboxylic acid component, 260 g of isononyl alcohol as an alcohol component, and 0.13 g of tetraisopropyl titanate as a catalyst were placed. While the mixture was stirred under nitrogen stream flow, a temperature was increased in a stepwise manner to 220°C over 5 hours. When the temperature reached 220°C, a reaction was allowed to proceed for 21 hours. A hydroxyl value of less than 9 mg KOH/g was confirmed, and the unreacted raw material and a low volatile component were then removed under reduced pressure at 200°C to obtain a modifier for fluidity D that was a polyester.

The obtained modifier for fluidity D was a pale yellow liquid at normal temperature, had an acid group of 35 mg KOH/g, a hydroxyl value of 7 mg KOH/g, and a number average molecular weight of 2,200.

### (Synthesis Example 5: synthesis of modifier for fluidity E)

In a 2-liter four-necked flask equipped with a thermometer, a stirrer, and a reflux condenser, 479 g of adipic acid as a dicarboxylic acid component, 298 g of 2-decyloxirane as a glycol component, and 234 g of 2-dodecyloxirane were placed. While the mixture was stirred under nitrogen stream flow, a reaction was allowed to proceed at 155°C for 3 hours to eliminate an epoxyfunctional group. 25 g of 2-methyl-1,3-propanediol as a glycol component, 72 g of isononyl alcohol as an alcohol component, and 0.03 g of tetraisopropyl titanate as a catalyst were further placed. While the mixture was stirred under nitrogen stream flow, a temperature was increased in a stepwise manner to 230°C over 3 hours. When the temperature reached 230°C, a reaction was allowed to proceed for 17 hours. A hydroxyl value of less than 9 mg KOH/g was confirmed, and the unreacted raw material and a low volatile component were then removed under reduced pressure at 220°C to obtain a modifier for fluidity E that was a polyester.

The obtained modifier for fluidity E was a pale yellow liquid at normal temperature, had an acid group of 32 mg KOH/g, a hydroxyl value of 1 mg KOH/g, and a number average molecular weight of 2,100.

### (Comparative Synthesis Example 2 synthesis of modifier for fluidity B')

In a 2-liter four-necked flask equipped with a thermometer, a stirrer, and a reflux condenser, 459.3 g of 1,3-butanediol and 48.7 g of neopentylglycol as glycol components, 616.2 g of adipic acid as a dicarboxylic acid component, and 0.112 g of tetraisopropyl titanate as an esterification catalyst were placed. While the mixture was stirred under nitrogen stream flow, a temperature was increased in a stepwise manner to 220°C, and a reaction was allowed to proceed for 10 hours in total. After the reaction, 0.056 g of hydroquinone and 44.2 g of maleic anhydride were added at 150°C to complete the reaction. Thus, a modifier for fluidity B' that was a polyester was obtained.

The obtained modifier for fluidity B' was a pale yellow liquid at normal temperature, had an acid group of 29 mg KOH/g, a hydroxyl value of 120 mg KOH/g, and a number average molecular weight of 950.

### (Comparative Synthesis Example 3 synthesis of modifier for fluidity C')

In a 3-liter four-necked flask equipped with a thermometer, a stirrer, and a reflux condenser, 1,214 g of 3-methyl-1,5-pentanediol as a glycol component, 966 g of sebacic acid as a dicarboxylic acid component, and 0.07 g of tetraisopropyl titanate as an esterification catalyst were placed. While the mixture was stirred under nitrogen stream flow, a temperature was increased in a stepwise manner to 220°C, and a reaction was allowed to proceed for 12 hours in total. After the reaction, 271 g of maleic anhydride was added at 125°C to complete the reaction. Thus, a modifier for fluidity C' that was a polyester having a carboxyl group at both ends was obtained.

The obtained modifier for fluidity C' was a pale yellow liquid at normal temperature, had an acid group of 55 mg KOH/g, a hydroxyl value of 55 mg KOH/g, and a number average molecular weight of 1,500.

### (Comparative Synthesis Example 4: synthesis of comparison modifier D')

In a 5-liter four-necked flask equipped with a thermometer, a stirrer, and a reflux condenser, 522 g of 1,4-butylene glycol and 604 g of neopentylglycol as glycol components, 1,913 g of adipic acid as a dicarboxylic acid component, 446 g of isononyl alcohol as an alcohol component, and 0.11 g of tetraisopropyl titanate as a catalyst were placed. While the mixture was stirred under nitrogen stream flow, a temperature was increased in a stepwise manner to 220°C over 5 hours. When the temperature reached 220°C, a reaction was allowed to proceed for 20 hours. The unreacted raw material and a low volatile component were removed under reduced pressure at 200°C to obtain a comparison modifier D' that was a polyester.

The obtained comparison modifier D' was a pale yellow liquid at normal temperature, had an acid group of 0.5 mg KOH/g, a hydroxyl value of 10 mg KOH/g, and a number average molecular weight of 2,300.

### (Examples 1 to 4 and Comparative Examples 1 to 5: Preparation and evaluation of aluminum filler-containing composition)

Spherical alumina ("DAW-07"/"DAW-45" manufactured by Denka Company Limited) and aluminum hydroxide as inorganic fillers, polypropylene glycol ("PPG1000" manufactured by FUJIFILM Wako Pure Chemical Corporation) and polyisocyanate ("BURNOCK DN-980S" manufactured by DIC Corporation) as base components, an ether ester compound ("Monocizer W-260" manufactured by DIC Corporation) as a plasticizer, and each of the modifiers for fluidity were blended at a ratio listed in Table 1, and stirred at 1,000 rpm and 0.2 Pa for 2 minutes with a planetary mixer (THINKY ARV-310) to obtain each pasty inorganic filler-containing composition.

The fluidity of each of the obtained pastes was evaluated by the following method. The results are listed in Table 1.

### (Method for Evaluating Fluidity)

0.4 g of the obtained paste was weighed at 23°C on a glass substrate of 5 cm in length, 5 cm in width, and 2 mm in thickness. The paste was placed between the glass substrate and a glass substrate with the same size. 500 g of weight was placed on the glass substrate to apply a load. This state was allowed to remain for 1 minute, and the load was released. The diameter of the paste that flowed between the two glass substrates to form a circle was measured. As the fluidity is better, the diameter is larger.

**[Table 1]**

| | | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|---|
| Formulation [Part by mass] | Spherical alumina (DAW-07) | 28.7 | 28.7 | 28.7 | 28.7 | 28.7 | 28.7 | 28.7 | 28.7 | 28.7 |
| | Spherical alumina (DAW-45) | 28.7 | 28.7 | 28.7 | 28.7 | 28.7 | 28.7 | 28.7 | 28.7 | 28.7 |
| | Aluminum hydroxide | 29.6 | 29.6 | 29.6 | 29.6 | 29.6 | 29.6 | 29.6 | 29.6 | 29.6 |
| | Polypropylene glycol (PPG1000) | 5.2 | 5.2 | 5.2 | 5.2 | 5.2 | 5.2 | 5.2 | 5.2 | 5.2 |
| | Polyisocyanate (DN-980S) | 4 | 4 | 4 | 4 | 4 | 4 | 4 | 4 | 4 |
| | Ether ester compound (W-260) | 3.8 | 3.8 | 3.8 | 3.8 | 3.8 | 4.8 | 3.8 | 3.8 | 3.8 |
| | Modifier for fluidity A | 1 | | | | | | | | |
| | Modifier for fluidity B | | 1 | | | | | | | |
| | Modifier for fluidity C | | | 1 | | | | | | |
| | Modifier for fluidity E | | | | 1 | | | | | |
| | Modifier for fluidity A' | | | | | | | 1 | | |
| | Modifier for fluidity B' | | | | | | | | 1 | |
| | Modifier for fluidity C' | | | | | | | | | 1 |
| Evaluation of fluidity [mm] | | 30 | 31 | 31 | 35 | Bad | Bad | 30 | 25 | 30 |

In Tables, "Bad" means that the diameter cannot be measured since the paste after the loading did not flow or form a circle.

### (Examples 5 to 7 and Comparative Examples 6 to 9: Preparation and evaluation of aluminum filler-containing composition)

Spherical alumina ("DAW-07"/"DAW-45" manufactured by Denka Company Limited) as an inorganic filler, castor oil as a base component, and each of the modifiers for fluidity were blended at a ratio listed in Table 2, and stirred at 1,000 rpm and 0.2 Pa for 2 minutes with a planetary mixer (THINKY ARV-310) to obtain each pasty inorganic filler-containing composition.

The fluidity of each of the obtained pastes was evaluated by the aforementioned method. The results are listed in Table 2.

**[Table 2]**

| | | Ex. 5 | Ex. 6 | Ex. 7 | Comp. Ex. 6 | Comp. Ex. 7 | Comp. Ex. 8 | Comp. Ex. 9 |
|---|---|---|---|---|---|---|---|---|
| Formulation [Part by mass] | Spherical alumina (DAW-07) | 46.25 | 46.25 | 46.25 | 46.25 | 46.25 | 46.25 | 46.25 |
| | Spherical alumina (DAW-45) | 46.25 | 46.25 | 46.25 | 46.25 | 46.25 | 46.25 | 46.25 |
| | Castor oil | 7.5 | 7.5 | 7.5 | 7.5 | 7.5 | 7.5 | 7.5 |
| | Modifier for fluidity A | 1 | | | | | | |
| | Modifier for fluidity B | | 1 | | | | | |
| | Modifier for fluidity E | | | 1 | | | | |
| | Modifier for fluidity A' | | | | | 1 | | |
| | Modifier for fluidity B' | | | | | | 1 | |
| | Modifier for fluidity C' | | | | | | | 1 |
| Evaluation of fluidity [mm] | | 18 | 17 | 25 | Bad | 12 | Bad | Bad |

The results of Table 1 and Table 2 show that in the case of the modifiers for fluidity of Examples, a fluidity-improving effect is obtained regardless of the type of the base component. In contrast, it is shown that in the case of the modifiers for fluidity of Comparative Examples in which the base component is castor oil, the fluidity is largely reduced.

In the case of the modifiers for fluidity of Examples, it is estimated that the fluidity is improved due to the presence of a stable layer of each of the modifiers for fluidity that prevents contact of fillers in the vicinity of the inorganic filler. When the base component is a component having a hydroxyl group (e.g., castor oil), the modifiers for fluidity of Comparative Examples having a high hydroxyl value have high affinity with the base component having a hydroxyl group. This shows that the modifiers for fluidity are not unevenly present in the vicinity of the filler and the fluidity-improving effect is not expected.

### (Examples 8 to 11 and Comparative Examples 10 to 13: Preparation and evaluation of aluminum filler-containing composition)

Spherical alumina ("DAW-07"/"DAW-45" manufactured by Denka Company Limited) as an inorganic filler, a silicone resin (methylphenyl silicone oil, "KF-54" manufactured by Shin-Etsu Chemical Co., Ltd.) as a base component, and each of the modifiers for fluidity were blended at a ratio listed in Table 3, and stirred at 1,000 rpm and 0.2 Pa for 2 minutes with a planetary mixer (THINKY ARV-310) to obtain each pasty inorganic filler-containing composition.

The fluidity of each of the obtained pastes was evaluated by the aforementioned method. The results are listed in Table 3.

**[Table 3]**

| | | Ex. 8 | Ex. 9 | Ex. 10 | Ex. 11 | Comp. Ex. 10 | Comp. Ex. 11 | Comp. Ex. 12 | Comp. Ex. 13 |
|---|---|---|---|---|---|---|---|---|---|
| Formulation [Part by mass] | Spherical alumina (DAW-07) | 45 | 45 | 45 | 45 | 45 | 45 | 45 | 45 |
| | Spherical alumina (DAW-45) | 45 | 45 | 45 | 45 | 45 | 45 | 45 | 45 |
| | Methylphenyl silicone oil (KF-54) | 10 | 10 | 10 | 10 | 10 | 10 | 10 | 10 |
| | Modifier for fluidity A | 1 | | | | | | | |
| | Modifier for fluidity B | | 1 | | | | | | |
| | Modifier for fluidity C | | | 1 | | | | | |
| | Modifier for fluidity E | | | | 1 | | | | |
| | Modifier for fluidity A' | | | | | | 1 | | |
| | Modifier for fluidity B' | | | | | | | 1 | |
| | Modifier for fluidity C' | | | | | | | | 1 |
| Evaluation of fluidity [mm] | | 18 | 18 | 17 | 26 | 14 | 16 | 16 | 16 |

### (Examples 12 to 16 and Comparative Examples 14 to 18: Preparation and evaluation of aluminum filler-containing composition)

Spherical alumina ("DAW-07"/"DAW-45" manufactured by Denka Company Limited) or aluminum nitride ("AlN20AF" manufactured by Thrutek Applied Materials Co., Ltd.) as an inorganic filler, a bisphenol A type liquid epoxy resin ("EPICLON 850-S" manufactured by DIC Corporation) as a base component, and each of the modifiers for fluidity were blended at a ratio listed in 4, and stirred at 1,000 rpm and 0.2 Pa for 2 minutes with a planetary mixer (THINKY ARV-310) to obtain each pasty inorganic filler-containing composition.

The fluidity of each of the obtained pastes was evaluated by the aforementioned method. The results are listed in Table 4.

**[Table 4]**

| | | Ex. 12 | Ex. 13 | Ex. 14 | Ex. 15 | Ex. 16 | Comp. Ex. 14 | Comp. Ex. 15 | Comp. Ex. 16 | Comp. Ex. 17 | Comp. Ex. 18 |
|---|---|---|---|---|---|---|---|---|---|---|---|
| Formulation [Part by mass] | Spherical alumina (DAW-07) | 45 | 45 | 45 | 30 | 30 | 45 | 45 | 45 | 45 | 30 |
| | Spherical alumina (DAW-45) | 45 | 45 | 45 | 30 | 30 | 45 | 45 | 45 | 45 | 30 |
| | Aluminum nitride (AlN20AF) | | | | 20 | 20 | | | | | 20 |
| | Epoxy resin (EPICLON 850-S) | 10 | 10 | 10 | 20 | 20 | 10 | 1 | 10 | 10 | 20 |
| | Modifier for fluidity A | 1 | | | 1 | | | | | | |
| | Modifier for fluidity B | | 1 | | | | | | | | |
| | Modifier for fluidity E | | | 1 | | 1 | | | | | |
| | Modifier | | | | | | | 1 | | | |
| | for fluidity A' | | | | | | | | | | |
| | Modifier for fluidity B' | | | | | | | | 1 | | |
| | Modifier for fluidity C' | | | | | | | | | 1 | |
| Evaluation of fluidity [mm] | | 20 | 18 | 26 | 19 | 20 | Bad | 12 | Bad | 11 | Bad |

The results of Table 3 and Table 4 show that in the case of the modifiers for fluidity of Examples, a fluidity-improving effect is obtained regardless of the type of the base component. In contrast, it is shown that in the case of the modifiers for fluidity of Comparative Examples in which the base component is an epoxy resin, the fluidity is largely reduced.

In the case of the modifiers for fluidity of Examples, it is estimated that the fluidity is improved due to the presence of a stable layer of each of the modifiers for fluidity that prevents contact of fillers in the vicinity of the inorganic filler. When the base component is a high-polar component (e.g., an epoxy resin), it is shown that the modifiers for fluidity of Comparative Examples having a high hydroxyl value are not unevenly present in the vicinity of the filler and the fluidity-improving effect is not expected.

### (Examples 17 to 20 and Comparative Examples 19 to 22: Preparation and evaluation of calcium carbonate filler-containing composition)

Calcium carbonate (heavy-weight calcium carbonate, "SUPER S" manufactured by Maruo Calcium Co., Ltd.) as an inorganic filler, diisononyl phthalate (DINP) as a plasticizer, diethyl methylbenzene diamine (DETDA) as a polyurethane-forming curing component, and each of the modifiers for fluidity were blended at a ratio listed in Table 5, and stirred at 1,000 rpm and 0.2 Pa for 2 minutes with a planetary mixer (THINKY ARV-310) to obtain each pasty inorganic filler-containing composition.

The viscosity of each of the obtained pastes was evaluated by the following method. The results are listed in Table 5.

### (Method for Measuring Viscosity)

The viscosity of each of the obtained pastes was measured with an E type viscometer (TVE-25H manufactured by Toyosangyo k.k.) using a standard rotor (1°34'×R24, a shear rate: [1/S]3.83×N, N: rotation speed [rpm] of rotor). Specifically, the obtained pastes each were treated at a measurement temperature of 25°C and a rotation speed of 10 rpm for 3 minutes, and the viscosity of each of the treated pastes was read.

**[Table 5]**

| | | Ex. 17 | Ex. 18 | Ex. 19 | Ex. 20 | Comp. Ex. 19 | Comp. Ex. 20 | Comp. Ex. 21 | Comp. Ex. 22 |
|---|---|---|---|---|---|---|---|---|---|
| Formulation [Part by mass] | Calcium carbonate (SUPER S) | 60 | 60 | 60 | 60 | 60 | 60 | 60 | 60 |
| | DINP | 33 | 33 | 33 | 33 | 33 | 33 | 33 | 33 |
| | DETDA | 7 | 7 | 7 | 7 | 7 | 7 | 7 | 7 |
| | Modifier for fluidity A | 0.3 | | | | | | | |
| | Modifier for fluidity B | | 0.3 | | | | | | |
| | Modifier for fluidity C | | | 0.3 | | | | | |
| | Modifier for fluidity E | | | | 0.3 | | | | |
| | Modifier for fluidity A' | | | | | | 0.3 | | |
| | Modifier for fluidity B' | | | | | | | 0.3 | |
| | Modifier for fluidity C' | | | | | | | | 0.3 |
| Viscosity [mPa·s] | | 1,170 | 1,010 | 900 | 700 | 3,200 | 940 | 2,420 | 1,020 |

### (Examples 21 to 24 and Comparative Examples 23 to 26: Preparation and evaluation of polyisocyanate-containing composition)

Polyisocyanate ("BURNOCK DN-980S" manufactured by DIC Corporation) as a base component, an ether ester compound ("Monocizer W-260" manufactured by DIC Corporation) as a plasticizer, and each of the modifiers for fluidity were blended at a ratio listed in Table 6, and stirred at 1,000 rpm and 0.2 Pa for 2 minutes with a planetary mixer (THINKY ARV-310) to obtain each pasty polyisocyanate-containing composition.

A change with time in viscosity of each of the obtained pastes was evaluated by the following method. The results are listed in Table 6.

### (Method for Measuring Viscosity)

The viscosity immediately after preparation (initial viscosity) and viscosity after standing in an incubator at 25°C for 7 days (viscosity after 7 days) of each of the pastes were each measured with an E type viscometer (TV-25H manufactured by Toyosangyo k.k.) using a standard rotor (1°34'×R24, a shear rate: [1/S] 3.83×N, N: rotation speed [rpm] of rotor). The obtained pastes were each treated at a measurement temperature of 25°C and a rotation speed of 10 rpm for 3 minutes, and the viscosity of each of the treated pastes was read as a measurement value of viscosity.

The ratio of the viscosity after 7 days to the initial viscosity was calculated as an viscosity change amount.

**[Table 6]**

| | | Ex. 21 | Ex. 22 | Ex. 23 | Ex. 24 | Comp. Ex. 23 | Comp. Ex. 24 | Comp. Ex. 25 | Comp. Ex. 26 |
|---|---|---|---|---|---|---|---|---|---|
| Formulation [Part by mass] | Polyisocyanate (DN-980S) | 90 | 90 | 90 | 90 | 90 | 90 | 90 | 90 |
| | Ether ester compound (W-260) | 45 | 45 | 45 | 45 | 45 | 45 | 45 | 45 |
| | Modifier for fluidity A | 10 | | | | | | | |
| | Modifier for fluidity B | | 10 | | | | | | |
| | Modifier for fluidity C | | | 10 | | | | | |
| | Modifier for fluidity E | | | | 10 | | | | |
| | Modifier for fluidity A' | | | | | | 10 | | |
| | Modifier for fluidity B' | | | | | | | 10 | |
| | Modifier for fluidity C' | | | | | | | | 10 |
| Initial viscosity [mPa·s] | | 473 | 478 | 407 | 330 | 267 | 501 | 381 | 469 |
| Viscosity after 7 days [mPa·s] | | 571 | 557 | 466 | 390 | 316 | 734 | 912 | 830 |
| Viscosity change amount [-] | | 1. 24 | 1.17 | 1.15 | 1.18 | 1.25 | 1.47 | 2.40 | 1.77 |

The results of Table 6 and Table 7 show that in the case of the modifiers for fluidity of Examples, an increase in tackiness with the passage of time can be suppressed. In contrast, it is shown that in the case of the modifiers for fluidity of Comparative Examples, the viscosity is increased with the passage of time. It is estimated that this is because the modifiers for fluidity of Comparative Examples having a high hydroxyl value react with an isocyanate group of the base component with the passage of time to increase the apparent molecular weight of the base component.

### (Usage Examples 1 to 3 and Usage Comparative Examples 1 to 9: Production and evaluation of silicone sheet)

Components listed in Table 7 were mixed under reduced pressure by 1,000 revolutions for 2 minutes to prepare a sheet composition. The obtained sheet composition was molded into a sheet with a press molding device (conditions: 11 MPa, 110°C, 15 minutes, thickness of spacer metal frame: 0.5 mm). By the pressing, a silicone sheet having a thickness of about 0.5 mm was prepared.

For the prepared silicone sheet, the Shore A hardness, the elastic modulus, the elongation, and the thermal conductivity were each evaluated. The results are listed in Table 7.

The components of Table 7 are as described below.
Spherical alumina: mixture of DAW-07 (spherical alumina having a particle diameter (d50) of 8.1 µm, manufactured by Denka Company Limited) and DAW-45 (spherical alumina having a particle diameter (d50) of 43.3 µm, manufactured by Denka Company Limited) (DAW-07/DAW-45 = 50/50 (mass ratio))
Silicone resin: mixture of organopolysiloxane serving as a major agent (YE-5822A manufactured by Momentive Performance materials Inc.) and organopolysiloxane serving as a cross-linker (YE-5822B manufactured by Momentive Performance materials Inc.) (YE-5822A/YE-5822B = 90/10 (mass ratio))
Silane-coupling agent: decyltrimethoxysilane

### (Method for Evaluating Shore A hardness)

The obtained silicone sheets were overlapped to produce a silicone sheet laminate having a thickness of 6 mm, and the Shore A hardness of the silicone sheet laminate was measured with a durometer (Digital durometer DD4 type A, manufactured by ASKER).

### (Evaluation of Elastic Modulus and Elongation)

The prepared silicone sheet was subjected to a tensile test under the following conditions in accordance with JISK6251:2010, and the tensile elastic modulus and the tensile elongation ratio were measured. The tensile elongation ratio is a value that is expressed as a percentage and is obtained by subtracting an initial distance between chucks of 20 mm from the distance between chucks during tensile break of a 0.5-mm sheet and dividing the resultant value by a distance between chucks of 20 mm.
Measuring apparatus: "Tensilon universal testing machine" manufactured by Orientec Corporation
Sample shape: Dumbbell shape No. 3
Distance between chucks: 20 mm
Tensile speed: 200 mm/min
Measurement atmosphere: temperature: 23°C, humidity: 50%

### (Method for Evaluating Thermal Conductivity)

The prepared silicone sheets were cut into a 22-mm square and laminated to obtain laminates having a thickness of about 7 mm. Using two of the laminates, the thermal conductivity was measured with a physical properties measurement apparatus ("TPS-500" manufactured by Kyoto Electronics Manufacturing Co., Ltd.) in an atmosphere of 23°C by a hot disk method.

**[Table 7]**

| | | Usage Ex. 1 | Usage Ex. 2 | Usage Ex. 3 | Usage Comp Ex. 1 | Usage Comp Ex. 2 | Usage Comp Ex. 3 | Usage Comp Ex. 4 | Usage Comp Ex. 5 | Usage Comp Ex. 6 | Usage Comp Ex. 7 | Usage Comp Ex. 8 | Usage Comp Ex. 9 |
|---|---|---|---|---|---|---|---|---|---|---|---|---|---|
| Formulation [Part by mass] | Spherical alumina | 80 | 85 | 90 | 80 | 85 | 90 | 80 | 85 | 90 | 80 | 85 | 90 |
| | Silicone resin | 20 | 15 | 10 | 20 | 15 | 10 | 20 | 15 | 10 | 20 | 15 | 10 |
| | Modifier for fluidity D | 1 | 1 | 1 | | | | | | | | | |
| | Modifier for fluidity D' | | | | | | | 1 | 1 | 1 | | | |
| | Silane-coupling agent | | | | | | | | | | 1 | 1 | 1 |
| Shore A hardness | | 32.7 | 34.1 | 36.5 | 61.2 | 78.7 | 95.4 | 35.2 | 58.6 | 59.9 | 36.3 | 40.0 | 52.3 |
| Elastic Modulus [MPa·s] | | 1.2 | 2.3 | 1.8 | 8.5 | 18.6 | 71.3 | 4.2 | 6.2 | 5.5 | 5.7 | - | - |
| Elongation [%] | | 122.0 | 139.0 | 130.0 | 28.8 | 17.5 | 11.1 | 45.4 | 15.0 | 4.5 | 13.2 | - | - |
| Thermal | | 1.23 | 1.72 | 2.64 | 1.24 | 1.76 | 2.72 | 1.17 | 1.76 | 2.54 | 1.16 | 1.62 | 2.53 |
| conductivity [W/m·K] | | | | | | | | | | | | | |
| H₉₀/H₈₀ | 1.12 | | | 1.56 | | | 1.70 | | | 1.44 | | | |

In Table 7, the evaluation results "-" of the elastic modulus and the elongation in Usage Comparative Examples 8 and 9 mean that a sample is fragile and therefore the sample is not set in a measurement device or evaluated.

The results of Table 7 show that the silicone sheet using the modifier for fluidity D satisfies H₉₀/H₈₀≤1.30 in which H₈₀ is a Shore A hardness when the mass ratio (silicone resin:inorganic filler) of the silicone resin to the inorganic filler is 20:80, and H₉₀ is a Shore A hardness when the mass ratio (silicone resin:inorganic filler) of the silicone resin to the inorganic filler is 10:90, and low hardness can be maintained. In contrast, it is shown that the silicone sheet using the modifier for fluidity D' cannot satisfy H_{90/}H₈₀≤1.30 and low hardness cannot be maintained. In the case of the silicone sheet using a silane coupling agent instead of the modifier for fluidity, when the filling amount of alumina is increased, the flexibility is eliminated, and the silicone sheet cannot be used as a heat-dissipating material.

## Claims

1. A modifier for fluidity of an inorganic filler that is a polyester represented by a following general formula (1-1) or (1-2),
the polyester having an acid value of 3 to 400 mg KOH/g and a hydroxyl value of less than 9 mg KOH/g measured as outlined in the experimental part of the description, 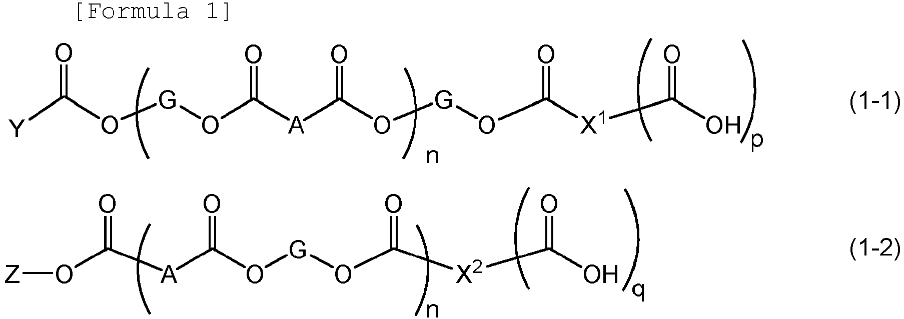
in the general formulae (1-1) and (1-2),
G is an aliphatic diol residue having 2 to 20 carbon atoms;
A is an aliphatic dicarboxylic acid residue having 2 to 10 carbon atoms;
X¹ and X² are each independently an aliphatic polybasic acid residue having 2 to 10 carbon atoms or an aromatic polybasic acid residue having 6 to 15 carbon atoms;
Y is a monocarboxylic acid residue having 1 to 20 carbon atoms;
Z is a monoalcohol residue having 2 to 30 carbon atoms;
p is an integer obtained by subtracting 1 from the number of basic acid functional groups in the aliphatic polybasic acid residue or aromatic polybasic acid residue of X¹;
q is an integer obtained by subtracting 1 from the number of basic acid functional groups in the aliphatic polybasic acid residue or aromatic polybasic acid residue of X²; and
n is the number of repetition.

2. The modifier for fluidity of an inorganic filler according to claim 1, wherein G is an aliphatic diol residue having a branched structure having 3 to 20 carbon atoms.

3. The modifier for fluidity of an inorganic filler according to claim 1 or 2, wherein A is an aliphatic dicarboxylic acid residue having 4 to 10 carbon atoms.

4. The modifier for fluidity of an inorganic filler according to claim 1 or 2, wherein X¹ and X² are each independently an aliphatic dicarboxylic acid residue having 2 to 10 carbon atoms.

5. The modifier for fluidity of an inorganic filler according to claim 1 or 2, wherein the polyester is a polyester represented by the general formula (1-2) where Z is an aliphatic monoalcohol residue having 2 to 30 carbon atoms.

6. The modifier for fluidity of an inorganic filler according to claim 1 or 2, wherein the modifier has a number average molecular weight of 1,500 to 5, 000 measured as outlined in the experimental part of the description.

7. The modifier for fluidity of an inorganic filler according to claim 1 or 2, wherein the modifier is a liquid at room temperature.

8. The modifier for fluidity of an inorganic filler according to claim 1 or 2, wherein the modifier is a modifier for fluidity of one or more types of inorganic fillers selected from the group consisting of calcium carbonate, silica, alumina, aluminum hydroxide, talc, barium titanate, boron nitride, and aluminum nitride.

9. An inorganic filler-containing composition comprising an inorganic filler and the modifier for fluidity of an inorganic filler according to claim 1 or 2.

10. The inorganic filler-containing resin composition according to claim 9, wherein the inorganic filler is one or more selected from the group consisting of calcium carbonate, silica, alumina, aluminum hydroxide, talc, barium titanate, magnesium oxide, boron nitride, and aluminum nitride.

11. The inorganic filler-containing composition according to claim 9, further comprising a plasticizer.

12. The inorganic filler-containing composition according to claim 9, including one or more types of resins selected from the group consisting of a polyolefin, a polyester, a polysulfide, a polyvinyl chloride, a modified polysulfide, a silicone resin, a modified silicone resin, an acrylic urethane resin, an epoxy resin, a polyurethane, a polyisocyanate resin, an acrylic resin, a polyester, and an unsaturated polyester.

13. A molded article of the inorganic filler-containing composition according to claim 9.

14. A heat-conductive silicone sheet comprising a silicone resin, an inorganic filler, and a modifier for fluidity of an inorganic filler, wherein
the inorganic filler is one or more selected from the group consisting of magnesium oxide, alumina, and aluminum hydroxide,
the modifier for fluidity of an inorganic filler is a polyester represented by a following general formula (1-1) or (1-2), the polyester having an acid value of 3 to 400 mg KOH/g and a hydroxyl value of less than 9 mg KOH/g,
a mass ratio (silicone resin:inorganic filler) of the silicone resin to the inorganic filler is from 50:50 to 1:99, and
the modifier for fluidity of an inorganic filler is contained in an amount of 0.01 to 5 parts by mass with respect to a total amount of the silicone resin and the inorganic filler of 100 parts by mass, 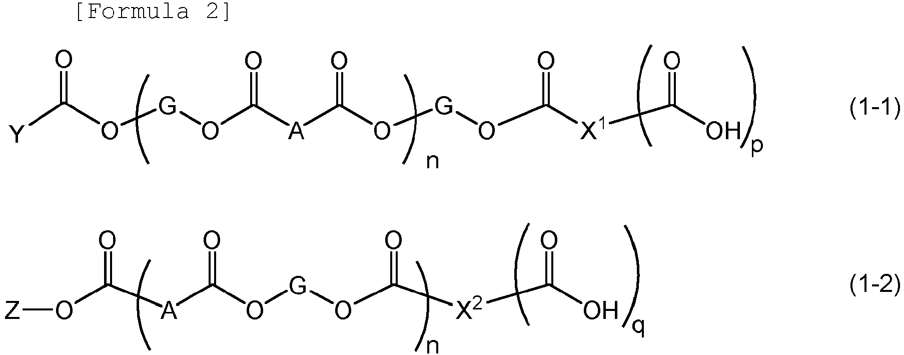
in the general formulae (1-1) and (1-2),
G is an aliphatic diol residue having 2 to 20 carbon atoms;
A is an aliphatic dicarboxylic acid residue having 2 to 10 carbon atoms;
X¹ and X² are each independently an aliphatic polybasic acid residue having 2 to 10 carbon atoms or an aromatic polybasic acid residue having 6 to 15 carbon atoms;
Y is a monocarboxylic acid residue having 1 to 20 carbon atoms;
Z is a monoalcohol residue having 2 to 30 carbon atoms;
p is an integer obtained by subtracting 1 from the number of basic acid functional groups in the aliphatic polybasic acid residue or aromatic polybasic acid residue of X¹;
q is an integer obtained by subtracting 1 from the number of basic acid functional groups in the aliphatic polybasic acid residue or aromatic polybasic acid residue of X²; and
n is the number of repetition.

15. The heat-conductive silicone sheet according to claim 14, wherein the heat-conductive silicone sheet satisfies H₉₀/H₈₀≤1.30 in which H₈₀ is a Shore A hardness measured as outlined in the experimental part of the description when a mass ratio (silicone resin:inorganic filler) of the silicone resin to the inorganic filler is 20:80, and H₉₀ is a Shore A hardness when a mass ratio (silicone resin:inorganic filler) of the silicone resin to the inorganic filler is 10:90.

## Patentansprüche

1. Fließfähigkeitsmodifikator für einen anorganischen Füllstoff, der ein durch eine folgende allgemeine Formel (1-1) oder (1-2) dargestellter Polyester ist,
wobei der Polyester eine Säurezahl von 3 bis 400 mg KOH/g und eine Hydroxylzahl von weniger als 9 mg KOH/g aufweist, gemessen wie im experimentellen Teil der Beschreibung dargelegt, 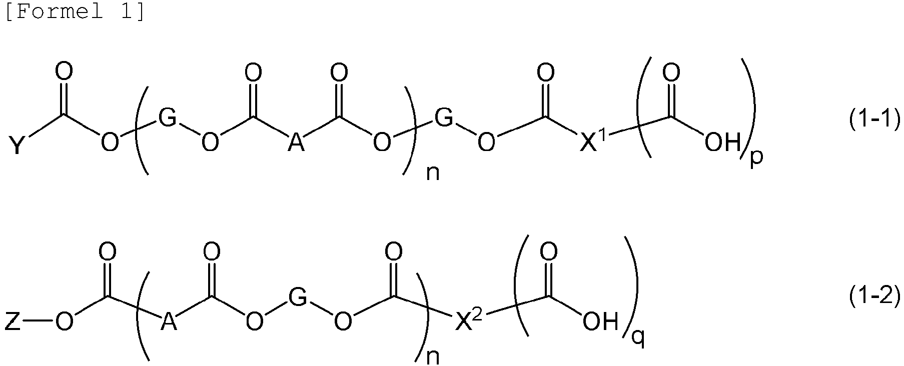
in den allgemeinen Formeln (1-1) und (1-2) gilt:
G ist ein aliphatischer Diolrest mit 2 bis 20 Kohlenstoffatomen;
A ist ein aliphatischer Dicarbonsäurerest mit 2 bis 10 Kohlenstoffatomen;
X¹ und X² sind jeweils unabhängig ein aliphatischer mehrbasiger Säurerest mit 2 bis 10 Kohlenstoffatomen oder ein aromatischer mehrbasiger Säurerest mit 6 bis 15 Kohlenstoffatomen;
Y ist ein Monocarbonsäurerest mit 1 bis 20 Kohlenstoffatomen;
Z ist ein Monoalkoholrest mit 2 bis 30 Kohlenstoffatomen;
p ist eine ganze Zahl, die durch Subtrahieren von 1 von der Anzahl der basischen Säurefunktionsgruppen im aliphatischen mehrbasigen Säurerest oder aromatischen mehrbasigen Säurerest von X¹ erhalten wird;
q ist eine ganze Zahl, die durch Subtrahieren von 1 von der Anzahl der basischen Säurefunktionsgruppen im aliphatischen mehrbasigen Säurerest oder aromatischen mehrbasigen Säurerest von X² erhalten wird; und
n ist die Anzahl der Wiederholungen.

2. Fließfähigkeitsmodifikator für einen anorganischen Füllstoff nach Anspruch 1, wobei G ein aliphatischer Diolrest mit einer verzweigten Struktur mit 3 bis 20 Kohlenstoffatomen ist.

3. Fließfähigkeitsmodifikator für einen anorganischen Füllstoff nach Anspruch 1 oder 2, wobei A ein aliphatischer Dicarbonsäurerest mit 4 bis 10 Kohlenstoffatomen ist.

4. Fließfähigkeitsmodifikator für einen anorganischen Füllstoff nach Anspruch 1 oder 2, wobei X¹ und X² jeweils unabhängig ein aliphatischer Dicarbonsäurerest mit 2 bis 10 Kohlenstoffatomen sind.

5. Fließfähigkeitsmodifikator für einen anorganischen Füllstoff nach Anspruch 1 oder 2, wobei der Polyester ein durch die allgemeine Formel (1-2) dargestellter Polyester ist, wobei Z ein aliphatischer Monoalkoholrest mit 2 bis 30 Kohlenstoffatomen ist.

6. Fließfähigkeitsmodifikator für einen anorganischen Füllstoff nach Anspruch 1 oder 2, wobei der Modifikator ein zahlenmittleres Molekulargewicht von 1.500 bis 5.000 aufweist, gemessen wie im experimentellen Teil der Beschreibung dargelegt.

7. Fließfähigkeitsmodifikator für einen anorganischen Füllstoff nach Anspruch 1 oder 2, wobei der Modifikator bei Raumtemperatur eine Flüssigkeit ist.

8. Fließfähigkeitsmodifikator für einen anorganischen Füllstoff nach Anspruch 1 oder 2, wobei der Modifikator ein Fließfähigkeitsmodifikator für eine oder mehrere Arten von anorganischen Füllstoffen ist, ausgewählt aus der Gruppe bestehend aus Calciumcarbonat, Siliciumdioxid, Aluminiumoxid, Aluminiumhydroxid, Talk, Bariumtitanat, Bornitrid und Aluminiumnitrid.

9. Zusammensetzung mit anorganischem Füllstoff, umfassend einen anorganischen Füllstoff und den Fließfähigkeitsmodifikator für einen anorganischen Füllstoff nach Anspruch 1 oder 2.

10. Harzzusammensetzung mit anorganischem Füllstoff nach Anspruch 9, wobei der anorganische Füllstoff einer oder mehrere ist, ausgewählt aus der Gruppe bestehend aus Calciumcarbonat, Siliciumdioxid, Aluminiumoxid, Aluminiumhydroxid, Talk, Bariumtitanat, Magnesiumoxid, Bornitrid und Aluminiumnitrid.

11. Zusammensetzung mit anorganischem Füllstoff nach Anspruch 9, ferner umfassend einen Weichmacher.

12. Zusammensetzung mit anorganischem Füllstoff nach Anspruch 9, beinhaltend eine oder mehrere Arten von Harzen, ausgewählt aus der Gruppe bestehend aus einem Polyolefin, einem Polyester, einem Polysulfid, einem Polyvinylchlorid, einem modifizierten Polysulfid, einem Silikonharz, einem modifizierten Silikonharz, einem Acrylurethanharz, einem Epoxidharz, einem Polyurethan, einem Polyisocyanatharz, einem Acrylharz, einem Polyester und einem ungesättigten Polyester.

13. Formkörper aus der Zusammensetzung mit anorganischem Füllstoff nach Anspruch 9.

14. Wärmeleitende Silikonfolie, umfassend ein Silikonharz, einen anorganischen Füllstoff und einen Fließfähigkeitsmodifikator für einen anorganischen Füllstoff, wobei
der anorganische Füllstoff einer oder mehrere ist, ausgewählt aus der Gruppe bestehend aus Magnesiumoxid, Aluminiumoxid und Aluminiumhydroxid,
der Fließfähigkeitsmodifikator für einen anorganischen Füllstoff ein durch eine folgende allgemeine Formel (1-1) oder (1-2) dargestellter Polyester ist, wobei der Polyester eine Säurezahl von 3 bis 400 mg KOH/g und eine Hydroxylzahl von weniger als 9 mg KOH/g aufweist,
ein Massenverhältnis (Silikonharz:anorganischer Füllstoff) des Silikonharzes zum anorganischen Füllstoff 50:50 bis 1:99 beträgt und
der Fließfähigkeitsmodifikator für einen anorganischen Füllstoff in einer Menge von 0,01 bis 5 Massenteilen, bezogen auf eine Gesamtmenge des Silikonharzes und des anorganischen Füllstoffs von 100 Massenteilen, enthalten ist, 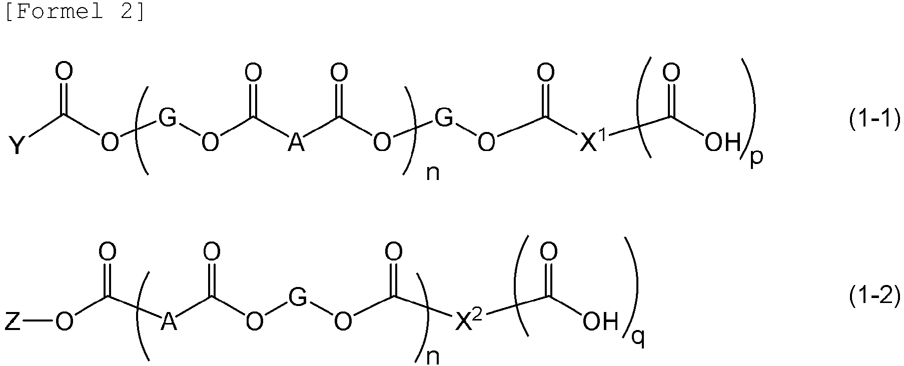
in den allgemeinen Formeln (1-1) und (1-2) gilt:
G ist ein aliphatischer Diolrest mit 2 bis 20 Kohlenstoffatomen;
A ist ein aliphatischer Dicarbonsäurerest mit 2 bis 10 Kohlenstoffatomen;
X¹ und X² sind jeweils unabhängig ein aliphatischer mehrbasiger Säurerest mit 2 bis 10 Kohlenstoffatomen oder ein aromatischer mehrbasiger Säurerest mit 6 bis 15 Kohlenstoffatomen;
Y ist ein Monocarbonsäurerest mit 1 bis 20 Kohlenstoffatomen;
Z ist ein Monoalkoholrest mit 2 bis 30 Kohlenstoffatomen;
p ist eine ganze Zahl, die durch Subtrahieren von 1 von der Anzahl der basischen Säurefunktionsgruppen im aliphatischen mehrbasigen Säurerest oder aromatischen mehrbasigen Säurerest von X¹ erhalten wird;
q ist eine ganze Zahl, die durch Subtrahieren von 1 von der Anzahl der basischen Säurefunktionsgruppen im aliphatischen mehrbasigen Säurerest oder aromatischen mehrbasigen Säurerest von X² erhalten wird; und
n ist die Anzahl der Wiederholungen.

15. Wärmeleitende Silikonfolie nach Anspruch 14, wobei die wärmeleitende Silikonfolie H₉₀/H₈₀≤1,30 erfüllt, wobei H₈₀ eine Shore-A-Härte ist, gemessen wie im experimentellen Teil der Beschreibung dargelegt, wenn ein Massenverhältnis (Silikonharz:anorganischer Füllstoff) des Silikonharzes zum anorganischen Füllstoff 20:80 beträgt, und H₉₀ eine Shore-A-Härte ist, gemessen wie im experimentellen Teil der Beschreibung dargelegt, wenn ein Massenverhältnis (Silikonharz:anorganischer Füllstoff) des Silikonharzes zum anorganischen Füllstoff 10:90 beträgt.

## Revendications

1. Modificateur de fluidité d'une charge inorganique qui est un polyester représenté par une formule générale (1-1) ou (1-2) suivante,
le polyester ayant un indice d'acide de 3 à 400 mg KOH/g et un indice d'hydroxyle inférieur à 9 mg KOH/g, mesurés comme indiqué dans la partie expérimentale de la description, 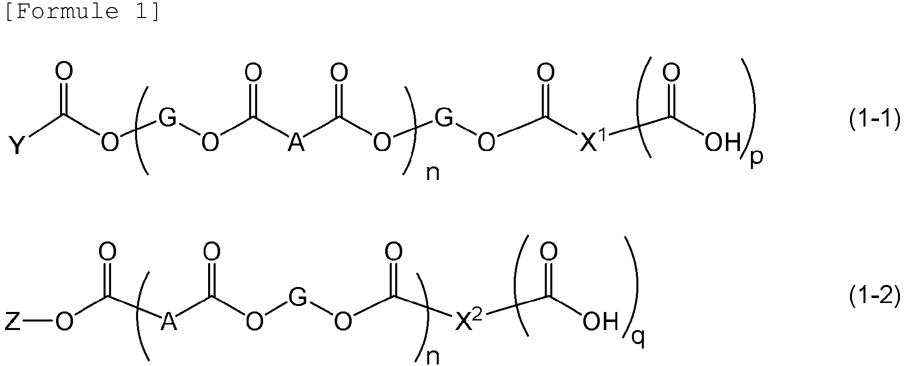
dans les formules générales (1-1) et (1-2),
G est un résidu de diol aliphatique ayant 2 à 20 atomes de carbone ;
A est un résidu d'acide dicarboxylique aliphatique ayant 2 à 10 atomes de carbone ;
X¹ et X² sont chacun indépendamment un résidu d'acide polybasique aliphatique ayant 2 à 10 atomes de carbone ou un résidu d'acide polybasique aromatique ayant 6 à 15 atomes de carbone ;
Y est un résidu d'acide monocarboxylique ayant 1 à 20 atomes de carbone ;
Z est un résidu de monoalcool ayant 2 à 30 atomes de carbone ;
p est un entier obtenu en soustrayant 1 du nombre de groupes fonctionnels d'acide basique dans le résidu d'acide polybasique aliphatique ou le résidu d'acide polybasique aromatique de X¹ ;
q est un entier obtenu en soustrayant 1 du nombre de groupes fonctionnels d'acide basique dans le résidu d'acide polybasique aliphatique ou le résidu d'acide polybasique aromatique de X² ; et
n est le nombre de répétitions.

2. Modificateur de fluidité d'une charge inorganique selon la revendication 1, dans lequel G est un résidu de diol aliphatique ayant une structure ramifiée ayant 3 à 20 atomes de carbone.

3. Modificateur de fluidité d'une charge inorganique selon la revendication 1 ou 2, dans lequel A est un résidu d'acide dicarboxylique aliphatique ayant 4 à 10 atomes de carbone.

4. Modificateur de fluidité d'une charge inorganique selon la revendication 1 ou 2, dans lequel X¹ et X² sont chacun indépendamment un résidu d'acide dicarboxylique aliphatique ayant 2 à 10 atomes de carbone.

5. Modificateur de fluidité d'une charge inorganique selon la revendication 1 ou 2, dans lequel le polyester est un polyester représenté par la formule générale (1-2) où Z est un résidu de monoalcool aliphatique ayant 2 à 30 atomes de carbone.

6. Modificateur de fluidité d'une charge inorganique selon la revendication 1 ou 2, dans lequel le modificateur a une masse moléculaire moyenne en nombre de 1 500 à 5 000, mesurée comme indiqué dans la partie expérimentale de la description.

7. Modificateur de fluidité d'une charge inorganique selon la revendication 1 ou 2, dans lequel le modificateur est un liquide à température ambiante.

8. Modificateur de fluidité d'une charge inorganique selon la revendication 1 ou 2, dans lequel le modificateur est un modificateur de fluidité d'un ou plusieurs types de charges inorganiques choisis dans le groupe constitué du carbonate de calcium, de la silice, de l'alumine, de l'hydroxyde d'aluminium, du talc, du titanate de baryum, du nitrure de bore et du nitrure d'aluminium.

9. Composition contenant une charge inorganique, comprenant une charge inorganique et le modificateur de fluidité d'une charge inorganique selon la revendication 1 ou 2.

10. Composition de résine contenant une charge inorganique selon la revendication 9, dans laquelle la charge inorganique est un ou plusieurs éléments choisis dans le groupe constitué du carbonate de calcium, de la silice, de l'alumine, de l'hydroxyde d'aluminium, du talc, du titanate de baryum, de l'oxyde de magnésium, du nitrure de bore et du nitrure d'aluminium.

11. Composition contenant une charge inorganique selon la revendication 9, comprenant en outre un plastifiant.

12. Composition contenant une charge inorganique selon la revendication 9, incluant un ou plusieurs types de résines choisis dans le groupe constitué d'une polyoléfine, d'un polyester, d'un polysulfure, d'un poly(chlorure de vinyle), d'un polysulfure modifié, d'une résine de silicone, d'une résine de silicone modifiée, d'une résine acrylique-uréthane, d'une résine époxy, d'un polyuréthane, d'une résine de polyisocyanate, d'une résine acrylique, d'un polyester et d'un polyester insaturé.

13. Article moulé de la composition contenant une charge inorganique selon la revendication 9.

14. Feuille de silicone thermoconductrice comprenant une résine de silicone, une charge inorganique et un modificateur de fluidité d'une charge inorganique, dans laquelle
la charge inorganique est un ou plusieurs éléments choisis dans le groupe constitué de l'oxyde de magnésium, de l'alumine et de l'hydroxyde d'aluminium,
le modificateur de fluidité d'une charge inorganique est un polyester représenté par une formule générale (1-1) ou (1-2) suivante, le polyester ayant un indice d'acide de 3 à 400 mg KOH/g et un indice d'hydroxyle inférieur à 9 mg KOH/g,
un rapport massique (résine de silicone:charge inorganique) de la résine de silicone à la charge inorganique est de 50:50 à 1:99, et
le modificateur de fluidité d'une charge inorganique est contenu en une quantité de 0,01 à 5 parties en masse par rapport à une quantité totale de la résine de silicone et de la charge inorganique de 100 parties en masse, 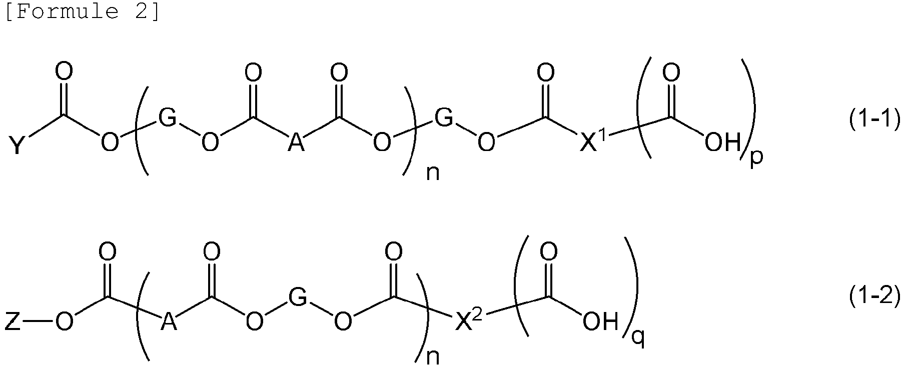 dans les formules générales (1-1) et (1-2),
G est un résidu de diol aliphatique ayant 2 à 20 atomes de carbone ;
A est un résidu d'acide dicarboxylique aliphatique ayant 2 à 10 atomes de carbone ;
X¹ et X² sont chacun indépendamment un résidu d'acide polybasique aliphatique ayant 2 à 10 atomes de carbone ou un résidu d'acide polybasique aromatique ayant 6 à 15 atomes de carbone ;
Y est un résidu d'acide monocarboxylique ayant 1 à 20 atomes de carbone ;
Z est un résidu de monoalcool ayant 2 à 30 atomes de carbone ;
p est un entier obtenu en soustrayant 1 du nombre de groupes fonctionnels d'acide basique dans le résidu d'acide polybasique aliphatique ou le résidu d'acide polybasique aromatique de X¹ ;
q est un entier obtenu en soustrayant 1 du nombre de groupes fonctionnels d'acide basique dans le résidu d'acide polybasique aliphatique ou le résidu d'acide polybasique aromatique de X² ; et
n est le nombre de répétitions.

15. Feuille de silicone thermoconductrice selon la revendication 14, dans laquelle la feuille de silicone thermoconductrice satisfait H₉₀/H₈₀≤1,30, où H₈₀ est une dureté Shore A mesurée comme indiqué dans la partie expérimentale de la description lorsqu'un rapport massique (résine de silicone:charge inorganique) de la résine de silicone à la charge inorganique est de 20:80, et H₉₀ est une dureté Shore A mesurée comme indiqué dans la partie expérimentale de la description lorsqu'un rapport massique (résine de silicone:charge inorganique) de la résine de silicone à la charge inorganique est de 10:90.
